# EUROPEAN PATENT SPECIFICATION

(11) **EP 0 482 205 B1**
(45) Date of publication and mention of the grant of the patent: **11.09.1996**
(21) Application number: 91907502.8
(22) Date of filing: 16.04.1991
(51) Int. Cl.: H02N 1/00

(54) **ELECTROSTATIC ACTUATOR**
ELEKTROSTATISCHER BETÄTIGER
ACTUATEUR ELECTROSTATIQUE

(30) Priority: 16.04.1990 JP 99694/90
(43) Date of publication of application: 29.04.1992
(73) Proprietor: FUJITSU LIMITED, Kawasaki-shi, Kanagawa 211 (JP); HIGUCHI, Toshiro, Yokohama-shi, Kanagawa 223 (JP)
(72) Inventor: HIGUCHI, Toshiro, 14-1, Chigasakiminami 4-chome, Yokohama-shi Kanagawa 223 (JP); EGAWA, Saku, 1-13-306, Sakurajyousui 4-chome, Tokyo 156 (JP); HIYANE, Masao, 546, Futoo-cho, Yokohama-shi Kanagawa 222 (JP); NATORI, Katsuhide, 3016-1, Nagatsuda-cho, Kanagawa 227 (JP)
(74) Representative: Fane, Christopher Robin King
(86) International application number: PCT/JP91/00497
(87) International publication number: WO 91/16757

(56) References cited:
- JP-A- 5 662 077
- JP-A- 6 387 181
- JP-B- 0 285 260
- JP-B- 0 322 256
- IEEE PROCEEDINGS: MICRO ELECTRO MECHANICAL SYSTEMS, 11-14 February 1990, Napa Valley, CA, US, pp. 166-171, XP138639; S. EGAWA et al.: 'Multi-layered electrostatic film actuator'
- PATENT ABSTRACTS OF JAPAN vol. 15, no. 62 (E-1033) 14 February 1991; & JP-A-2 285 978
- PATENT ABSTRACTS OF JAPAN vol. 12, no. 395 (E-671) 20 October 1988; & JP-A-63 136 979
- PATENT ABSTRACTS OF JAPAN vol. 12, no. 395 (E-671) 20 October 1988; & JP-A-63 136 980
- SENSOR AND ACTUATORS, vol. 20, nos. 1/2, 15 November 1989, Lausanne, CH, pp. 97-106, XP135248; S.F. BART et al.: 'An analysis of electroquasistatic induction micromotors'
- WORLD PATENTS INDEX LATEST Week 8417, Derwent Publications Ltd., London, GB; AN 84105850 & SU-A-1 029 361

## Description

This invention relates to electrostatic actuators.

An electrostatic generator has been well known in the past as an apparatus for converting mechanical energy to electric field energy, and an electrostatic motor is an apparatus for effecting the reverse operation to the above, that is, for converting electric field energy to mechanical energy.

The history of such an electrostatic motor is long, and such a motor was already being considered in the 18th century. The history of this kind of motor is described in detail in, for example, "Electrostatic Handbook", edited by the Society of Electrostatic Engineering, published by Ohm-sha, pp. 664 - 675.

The reference described above illustrates an induction motor which utilizes the delay of polarization of dielectrics.

The principle of this induction motor utilizes the time delay of polarization of a dielectric member and relies on the phenomenon that, when such a dielectric member is placed inside an electric field, it causes polarization.

In other words, when such a dielectric member is used as a rotor and is placed inside a rotating electric field inside a stator, an induction load of the dielectric member has a deviated angle from the rotating electric field due to the time delay. Such a motor is described, for example, in JP-A-63-136979 and JP-A-63-136980.

The interaction between the charge and the rotating electric field results in the turning force.

Motors that use a resistance body or element in place of the dielectric member are also known. The motors of this kind utilize the phenomenon that the charge induced into the resistance body inside the rotating electric field gets delayed in the direction of the electric field. However, conventional electrostatic motors involve the following drawbacks.
(1) A force whose direction crosses orthogonally a desired force of operation, i.e. a force of attraction, acts between the resistance body and an electrode. Therefore, a film structure of the motor is difficult to attain.
(2) The motor comprises a rotary mechanism including a stator and a rotor and having a certain gap. A mechanism such as a bearing is used to retain this gap. It is therefore difficult to reduce the gap over a wide area. To accomplish this object, the stator and the rotor must be sufficiently thick so as to improve rigidity. Therefore, the mass of the members is required to be large in order to keep this rigidity and a density of force (the force that can be generated per unit area) deteriorates.

Accordingly, the motor cannot be made compact in size and its density of force is low, too.

Report No. 737 of the 89th National Meeting of the Society of Electric Engineering, entitled "Electrostatic Actuator Using Resistance Body for Moving Element", proposes an electrostatic actuator capable of solving the problems described above.

This electrostatic actuator comprises a stator having a plurality of strip-form electrodes which are insulated from one another, a moving member which includes an insulator layer and a high resistance body layer (resistance element) and on the surface of which a charge pattern is induced in accordance with a voltage pattern applied to the strip-form electrodes, and control means for driving the moving member by switching the voltage to the strip-form electrodes.

The present inventors have disclosed such an actuator in a paper entitled "Multi-Layered Electrostatic Film Actuator", IEEE Proceedings on Micro Electro Mechanical Systems, 11-14 February 1990, pp. 166-171. This electrostatic actuator may be considered to include:
a first member having at or close to a working surface thereof a plurality of strip-form electrodes arranged in a predetermined pattern with predetermined gaps therebetween, the electrodes of the said plurality being divided into three sets that can be energised independently of one another; a second member movable relative to the first member and having a resistance element, extending over the said working surface, upon which a predetermined charge pattern can be induced by application to the said sets of electrodes of a predetermined combination of voltages; and control means for causing a predetermined change in the voltages applied respectively to the three sets of electrodes so that an electrostatic force is produced between the first and second members that brings about relative movement between those members in a direction tangential to the strip-form electrodes; the said resistance element having a time constant, determined primarily by the volume resistivity and dielectric constant of the material constituting that element, that is at least twice the time taken for such relative movement over a distance corresponding to the mutual spacing of the electrodes.

This electrostatic actuator can generate an electrostatic force between solid surfaces and can obtain a greater density of force by reducing the gap between the solid surfaces and increasing its surface area.

A force of repulsion arises between the status and moving member in a direction which causes the moving member to "float up" from the stator, and accordingly, the resultant force can be effectively converted to a driving force.

However, such a conventional electrostatic actuator is still not free from the problem that the structure is complicated, because the moving member has a two-layered structure comprising the insulator layer and the high resistance body layer.

Since this actuator utilises a resistance body (element), the time constant for charging the moving member must be set to a sufficiently long time in comparison with the time necessary for the moving member to move the distance required in each cycle during driving the strip-form electrodes. In other words, there is the problem that an initial charging time is long at the start of operation.

Furthermore, in this actuator, to develop the required voltage patterns the electrodes are divided into three sets that can be energised independently of one another. A problem arises in providing the connection lines for interconnecting the strip-form electrodes belonging to each set (each phase) and connecting them to the driving control circuit (control means), in that, although the wiring for two sets (phases) can be arranged on a single surface without the lines crossing over one another by wiring them mutually in a comb shape when the lines for all three phases are wired on a single surface the lines of the different phases must cross over one another, so that insulation must be provided at the crossover points.

When the strip-form electrodes are formed in a miniature pattern by utilizing the thin film formation technique, defects are likely to occur in the insulating film and inferior insulation is likely to occur because the insulation distance at the crossover portions is small and steps exist due to the difference of the film thickness. However, when a thick insulating film is formed, on the contrary, in order to secure sufficient insulation, a longer film formation time is necessary and this through-hole formation step becomes much more troublesome.

According to a first aspect of the present invention, the first member includes an electrode support portion, made of insulating material, on a first surface of which the electrodes of two of the said sets are mounted and on a further surface of which, opposite the said first surface, the electrodes of the other set are mounted.

Preferably the volume resistivity of the resistance element is from about 10⁹ to 10¹⁹ Ωcm, and more preferably from 10¹³ to 10¹⁵ Ωcm.

The volume resistivity and dielectric constant of this resistance body are set so that their product, i.e. volume resistivity x dielectric constant, which is one of the factors influencing the time constant of the resistance body, becomes at least twice, and preferably 30 times, the above-mentioned moving time.

In an actuator embodying the aforesaid first aspect of the present invention, it is preferable that the portion of the second member which is disposed so as to face the working surface of the first member having the strip-form electrodes is composed of a resistance element, so that a charge pattern can be generated efficiently in the resistance element by driving the strip-form electrodes on the first member side, and, as proved by experiment, the second member can be moved by switching the voltage to be applied to the strip-form electrodes.

Because the portion of the second member facing the first member is made of the resistance element, and the second member does not have the insulator layer between separating the resistance element from the first member, the electrodes can be close to this portion.
Accordingly, a strong electric field is allowed to effectively act on the resistance body and the charge pattern can be generated within a short time.

In such an actuator, the second member consists basically of the resistance element alone, and the characteristics of this resistance element are set so that the time constant of charging or discharging the charge to and from the resistance element as the second member, when the voltage is applied or cut off to and from the strip-form electrodes disposed on the first member, becomes at least twice the time (moving time) necessary for the second member to move the distance to be covered during each an operation cycle of the second member.

Therefore, it is not necessary to constitute the moving member by an insulator layer and a high resistance body layer, as has been necessary in the prior art, and the structure can be simplified.

In such an actuator the first member and the second member maintain mutual surface contact and are kept stationary so long as they are not driven. When driven, however, both members preferably separate from each other and are moved relative to each other while separated. Therefore, mechanical elements such as bearings and the like, that have been necessary in the prior art, become unnecessary, so that the structure can be simplified and its dimension can be reduced.

Since the first member and the second member are allowed to move relative to each other in an actuator embodying the present invention, the first member may be disposed held stationary whilst the second member is movable, or on the contrary, the first member may be movable whilst the second member is held stationary. In the following embodiments of the present invention, the description will be primarily concerned with the case where the first member is a fixed stationary member and the second member is a moving member moving over the stationary member, but the present invention is not particularly limited to this structure as already described.

In use of an actuator having the structure described above, the control means applies voltage pulses to the plurality electrodes, and is constituted so as to be capable of changing the pattern (combination) of the voltage pulses applied to the electrodes.

It has been found that in order to generate the floating force between the first and second members and to generate the relative moving force between them, the use of substantially discontinuous pulse voltages is necessary. For this reason, the relative movement in an actuator embodying the present invention is essentially an intermittent operation. Charge is initially induced to the second member by driving the electrodes, then the pattern of the voltages applied to the electrodes is changed so as to generate a floating force and the driving force, and the first or second member is moved by a distance corresponding to the electrode pitch before the charge in the second member changes significantly. Accordingly, since the charge is almost fixed in the second member, the quantity of Joule heat that is generated is small and, hence, an energy loss can be reduced.

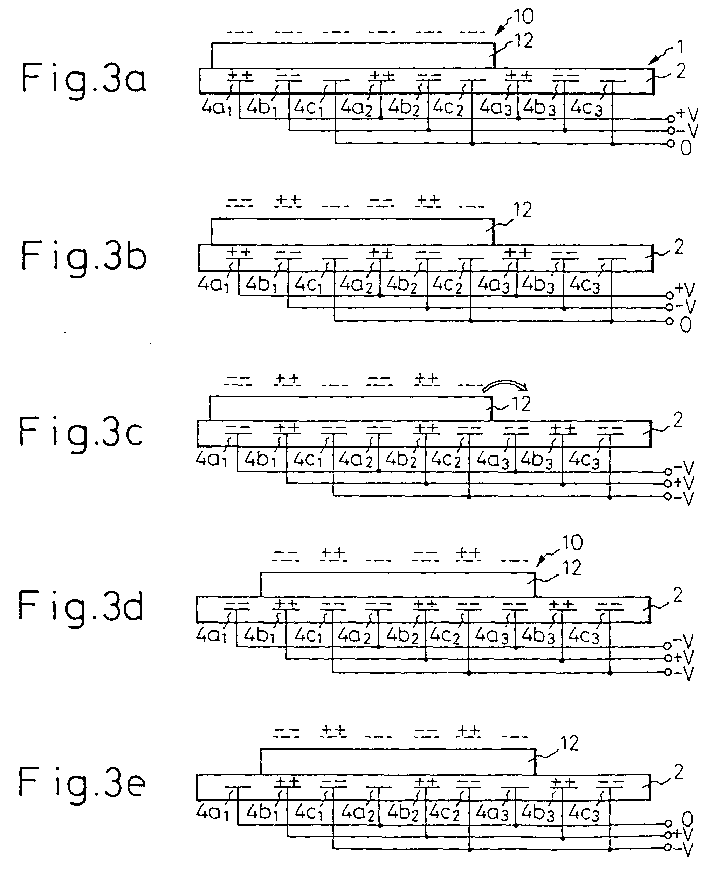

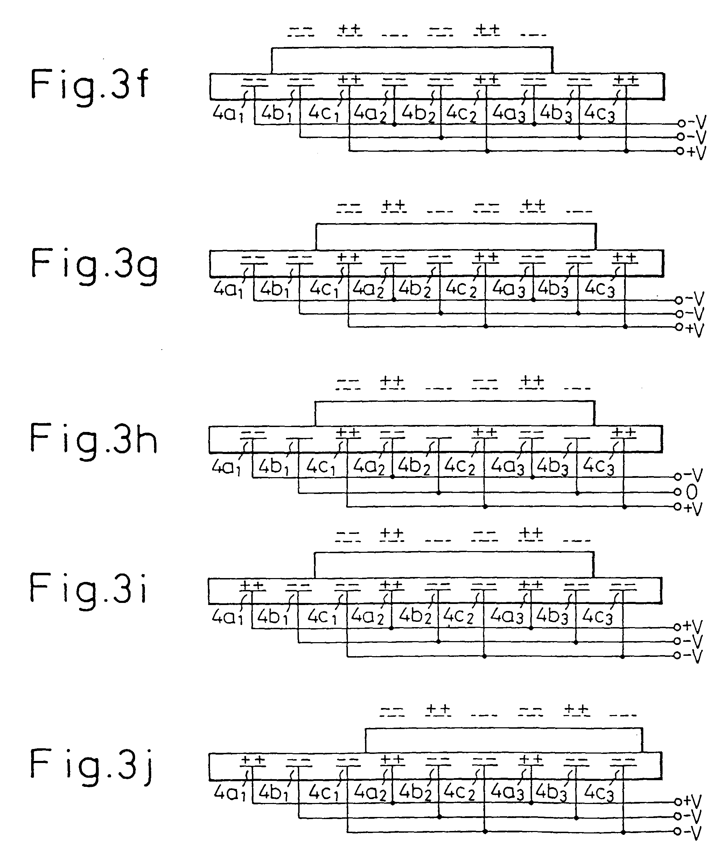

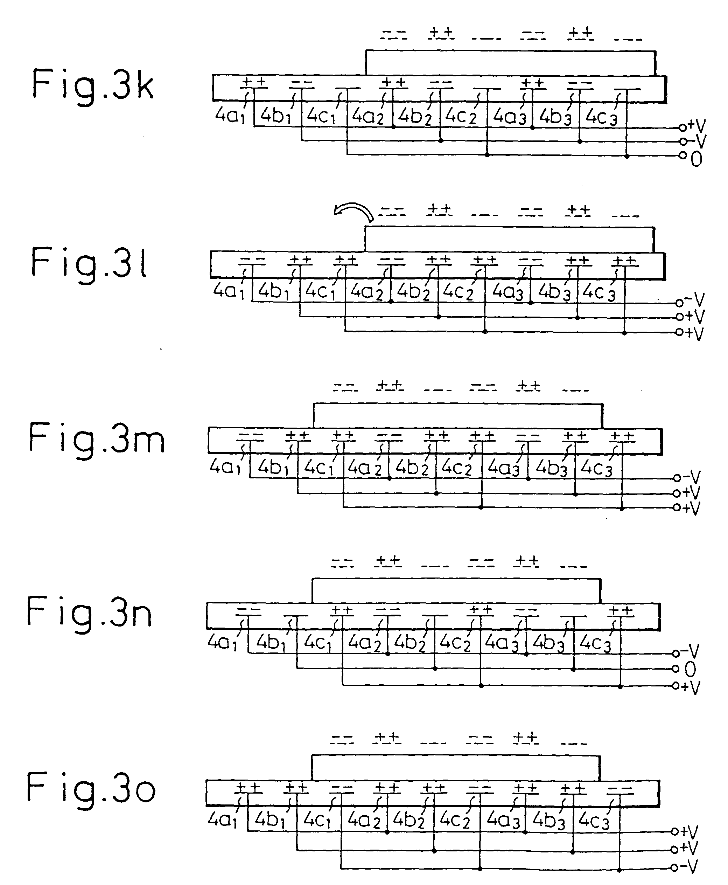

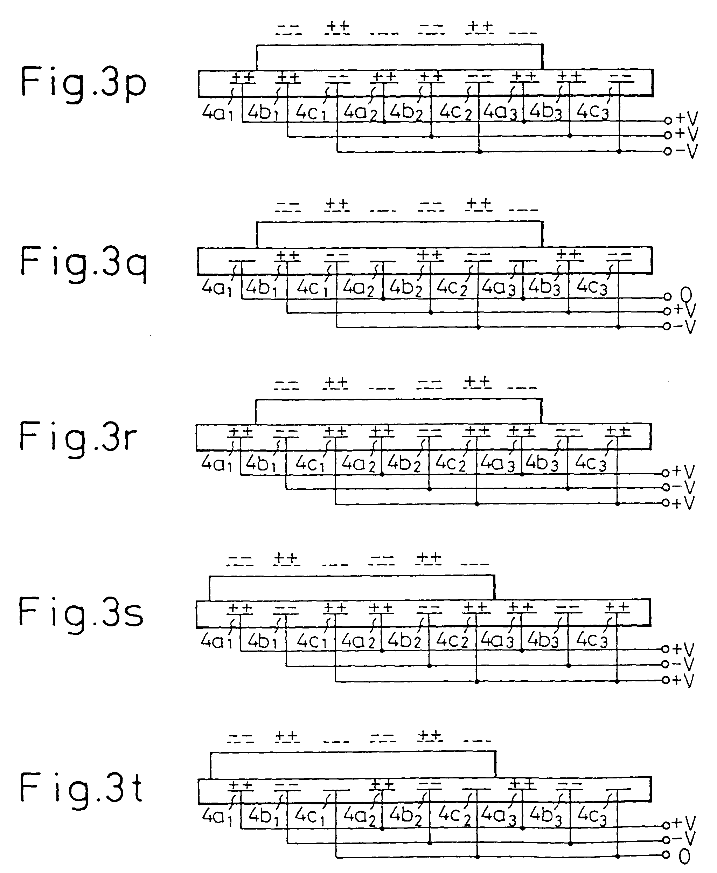

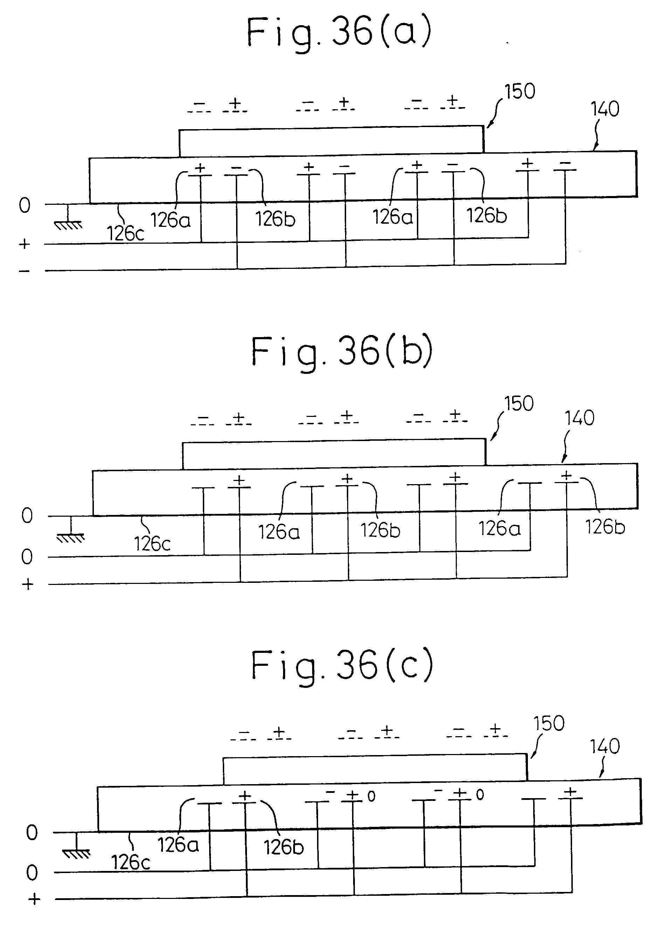

The application pattern of the pulse voltage in the present invention is not particularly limited. For example, a structure may be used in which the voltages applied to all three phases can be changed (as described later with reference to Figure 3) or a structure may be used in which the voltages applied to only two of the three phases can be changed (as described hereinafter with reference to Figure 36).

As mentioned above, the resistance element of the second member must be chosen having regard to the time constant ( τ ) associated with charging and discharging the charge pattern to and from the resistance element. Such a time constant can be fundamentally expressed by [volume resistivity x dielectric constant], but when the thickness of the resistance element is considerably smaller than the electrode pitch, the formula [time constant = volume resistivity/thickness x electrode pitch x dielectric constant] is used.

In the case of an extremely thin resistance element such as a coating film, the volume resistance cannot be measured so easily, hence, its characteristics are evaluated by the surface resistivity. Particularly, in the case of a material which exhibits electric conductivity on the surface by absorbing the moisture in air such as ordinary antistatic agents, the volume resistivity cannot be defined. In such a case, therefore, the formula [time constant = surface resistivity x electrode pitch x dielectric constant] is used.

In an actuator embodying the present invention, such a time constant ( τ ) is selected so as to be at least twice, preferably at least 30 times, the time (t) necessary for at least one of the first and second members to move relatively by a distance corresponding to the pitch of the electrodes.

Next, the reason the time constant ( τ ) is set to be τ ≥ 2t with respect to the moving time (t) described above will be explained. If the time constant ( τ ) is sufficiently great, the charge pattern on the second member hardly changes when the floating force and driving force are applied thereto in response to a change in the voltages applied to the electrodes, and the moving member moves a distance equal to the electrode pitch while the charge pattern is held stationary on the second member.

On the other hand, if the time constant ( τ ) is so small as to be substantially equal to the moving time (t), the charge moves before the movement of the moving member by one pitch is completed (before t). If τ becomes smaller still, the charge moves and the floating force and the driving force are lost before the moving member moves by one pitch, and the moving member stops within a short distance.

If the time constant ( τ ) is smaller than 2t, the moving speed generally becomes low and the charge moves inside the resistance element, so that Joule heat is generated, energy is lost and efficiency drops.

For the reasons described above, the relative movement can be attained at the maximum speed without allowing the charge induced on the resistance element to move, by setting the time constant ( τ ) to at least 2t. Moreover, the energy loss can be minimized and efficiency can be improved.

In one embodiment of the aforesaid first aspect of the present invention the resistance element of the second member is made of a photoconductive material, and the actuator further comprises light irradiation means arranged for irradiating light onto the said resistance element; the said control means being operable to cause a first voltage pattern to be applied to the three sets of electrodes at a time when the said light irradiation means are irradiating light on to the said resistance element, and to cause a different voltage pattern to be applied to the three sets of electrodes when such irradiation by the light irradiation means is stopped. In other words, since a readily-available photoconductive material has a volume resistivity which drops by a factor of between 1000 and 10000 in response to irradiation of light, the time for generating the charge pattern can be shortened by using such a photoconductive resistance body as the moving member, for example, and driving the electrodes while light is irradiated onto the resistance element. Accordingly, the time required before the start of the movement of the moving member can be shortened.

Electrostatic actuators embodying other aspects of the present invention are defined in the appended claims 22, 24, 25, 26, 28, 29 and 30.

According to a further aspect of the present invention there is provided apparatus for use in determining a predetermined physical property of a laminate electrically-resisting body, which apparatus comprises:
a support member having a working surface for supporting such a body and also having at or close to the said working surface a plurality of strip-form electrodes insulated from one another; and
control means operable, when such a body is supported on the said working surface so as to face the said electrodes, to cause a predetermined change in the voltages applied to the electrodes so that an electrostatic force is produced between the body and the support member that brings about relative movement between the body and the support member, which relative movement can be analysed to provide data for use in determining the said predetermined physical property of the body.

According to a still further aspect of the present invention there is provided apparatus for classifying by size a plurality of laminate electrically-resisting bodies, comprising:
a first member having a working surface for supporting such a plurality of bodies to be classified and also having at or close to the said working surface a plurality of strip-form electrodes extending in parallel to, and are insulated from, one another and arrayed across the said working surface from one side thereof to the opposite side thereof such that their mutual spacing increases progressively in the direction from the said one side to the said opposite side; and
control means operable, when such bodies are placed on the said one side of the said working surface so as to face the electrodes, to cause a sequence of predetermined changes in the voltages applied to the electrodes so that electrostatic forces are produced between the bodies on the one hand and the first member on the other hand, bringing about sequential movement of the bodies over the working surface in the said direction towards the said other side thereof, the size of each body in relation to the mutual spacing of the electrodes determining the distance which the body concerned moves in the said direction over the course of the said sequence so that upon completion of that sequence the relative positions of the bodies on the said working surface provide an indication of their relative sizes.

Reference will now be made, by way of example, to the accompanying drawings in which:
Fig. 1 is a perspective view of an electrostatic actuator embodying the present invention;
Fig. 2 is a schematic view of the Fig. 1 electrostatic actuator;
Figs. 3(a) to 3(t) are explanatory views useful for explaining the operation of the Fig. 1 electrostatic actuator;
Fig. 4 is a partial sectional view of the Fig. 1 electrostatic actuator;
Figs. 5, 6 and 7 show respective schematic views of different examples of laminate type electrostatic actuator embodying the present invention;
Fig. 8 is an explanatory view of a support structure for use in a laminate type electrostatic actuator embodying the present invention;
Fig. 9 is a schematic view of another example of such a laminate type electrostatic actuator;
Figs. 10(a), 10(b), and 11(a) to 11(c) are schematic views of different examples of electrostatic actuator including a plurality of electrode groups;
Figs. 12(a) to 12(e) are schematic views of different examples of electrostatic actuator having a plurality of radial electrodes;
Figs. 13A and 13B are schematic views of a laminate type electrostatic actuator having radial electrodes disposed radially;
Fig. 14 is a schematic view of parts of an electrostatic actuator having electrodes arranged in ring-like form;
Fig. 15 is a schematic view of parts of an electrostatic actuator having electrodes arranged in parallel with one another;
Fig. 16, 17, 18 and 19 show respective schematic views of different examples of cylindrical electrostatic actuators embodying the present invention;
Figs. 20 to 22 are schematic views of a further electrostatic actuator embodying the present invention which is constituted so that a movable member thereof moves in an inchworm-like motion;
Figs. 23 to 26 are explanatory views of further examples of electrostatic actuator embodying the present invention which employ an endless belt-like moving element;
Figs. 27 to 31 are explanatory views of different examples of spherical electrostatic actuator embodying the present invention;
Figs. 32(a) and 32(b) are schematic views illustrating one arrangement used for wiring the electrodes in the Figs. 27 and 30 actuators;
Fig. 33 is a schematic view showing another possible wiring arrangement for the electrodes in an actuator embodying the present invention;
Figs. 34(a) to 34(c) are schematic views for use in explaining a production method of the Fig. 33 wiring arrangement;
Fig. 35 is a schematic view illustrating another possible wiring arrangement for the electrodes in an actuator embodying the present invention;
Figs. 36(a) to 36(c) are schematic views for use in explaining how the electrodes are energised when using the Fig. 35 wiring arrangement;
Fig. 37 is a schematic view of yet another electrostatic actuator embodying the present invention which utilises light;
Fig. 38 is a schematic view of another electrostatic actuator embodying the present invention which utilises light; and
Fig. 39 is a schematic view of parts of an apparatus having a discrimination function.

Hereinafter, embodiments of the electrostatic actuator according to the present invention will be explained in detail with reference to the drawings.

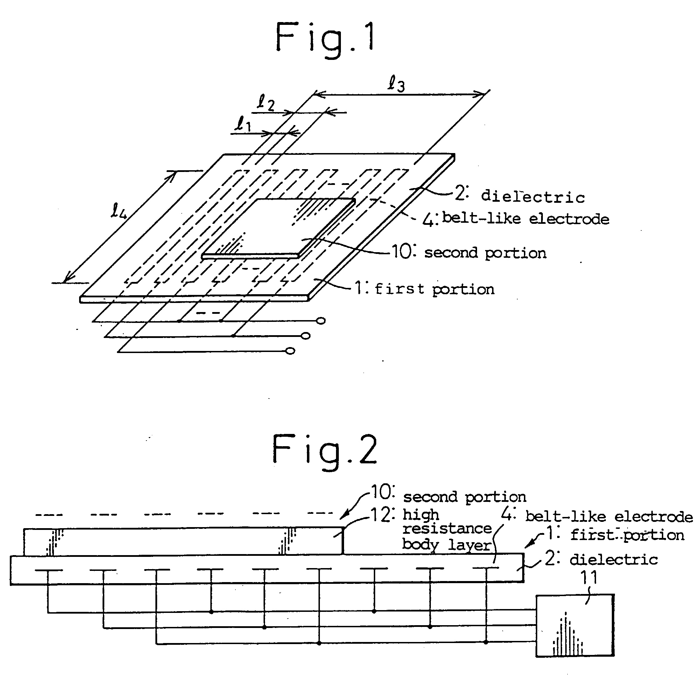

Figs. 1 to 3 are explanatory views useful for explaining the principle of the operation of an electrostatic actuator in accordance with the present invention.

As already described, either the first member (having the strip-form electrodes) or the second member (having the resistance element) may be moved relative to the other member in an actuator embodying the present invention. However, the following explanation will be primarily given in the case where the first member is fixed and the second member is movable, for ease of explanation. For this reason, the term "stationary member" represents the first member and the term "moving member" represents the second member in the following description.

As shown in Figs. 1 and 2, the stationary member 1 at the lower part is produced by burying a plurality of belt-like (strip-form) electrodes 4 in a dielectric 2.

On the other hand, the moving member 10 comprises a resistance body layer (resistance element) made of a thin film-like high resistance material, and is placed on the upper (working) surface of the stationary member 1 while maintaining contact with the latter.

For instance, the width ℓ₁ of the strip-form electrodes 4 is 0.4 mm and their pitch ℓ₂ is 1.27 mm. The total width ℓ₃ in which the strip-form electrodes are disposed in parallel is 126 mm and the length of each strip-form electrode 4 is 175 mm.

On the other hand, there are disposed control means 11 for applying a predetermined voltage to each of the strip-form electrodes.

Next, the operation of this electrostatic actuator will be explained with reference to Fig. 3.

First of all, as shown in Fig. 3(a), a positive voltage +V is applied to electrodes 4a₁ , 4a₂ , 4a₃ as a first electrode group (first set of electrodes) buried in the dielectric 2 that constitutes the stationary member 1. A negative voltage -V is applied to the electrodes 4b₁ , 4b₂ , 4b₃ as a second electrode group (second set of electrodes), and 0 V is applied to the electrodes 4c₁ , 4C₂ , 4c₃ as a third electrode group (third set of electrodes).

Then, charge concentrates on the high resistance body layer 12 of the moving member 10 due to the electric field which is generated at a position of the high resistance body layer 12 facing the strip-form electrodes at which the charge does not exist at the beginning.

The force of electrostatic attraction acts between the high resistance body layer 12 and the strip-form electrodes 4 and the friction between them keeps a stationary state.

Incidentally, the charge induced in the high resistance body layer can be regarded as existing at the positions marked by + and - symbols in Fig. 3 (b). Therefore, such imaginary charge will be referred to as the "induced charge" in the following description.

Next, the voltage to be applied to each set of electrodes is switched as shown in Fig. 3(c).

In other words, the negative voltage -V is applied to the electrodes 4a₁, 4a₂, 4a₃ as the first electrode group, the positive voltage +V to the electrodes 4b₁, 4b₂, 4b₃ as the second electrode group, and the negative voltage -V to the electrodes 4c₁, 4c₂, 4c₃ as the third electrode group.

Then the charge inside each electrode moves instantaneously but the charge induced in the high resistance body layer 12 cannot move very quickly because the resistance value of the high resistance body layer 12 is high.

Accordingly, the charges generated by the strip-form electrodes 4a₁, 4b₁, 4a₂, 4b₂ and the induced charge on the high resistance body layer 12 corresponding to each strip-form electrode have the same polarity, giving rise to a repulsion force. Accordingly, a "floating force", i.e. a repulsion force in a direction away from the working surface of the stationary member 1 (the floating direction) acts on the high resistance body layer 12 of the moving member 10, and the frictional force is drastically reduced.

The negative charge of the electrode 4c₁ and the positive charge induced by the electrode 4b₁ attract each other and the negative charge of the electrode 4c₁ and the negative charge induced by the electrode 4a₂ repel each other, so that the moving member 10 moves to the right.

When the moving member 10 moves one pitch to the right, the charge of the electrode and the induced charge on the electrode come to have different polarities. Consequently, the force of attraction acts and the high resistance body layer 12 (i.e. the moving member 10) comes to a halt at that position.

Then, 0 V is applied to the electrodes 4a₁, 4a₂, 4a₃ of the first electrode group, the positive voltage +V to the electrodes 4b₁, 4b₂, 4b₃ of the second electrode group and the negative voltage -V to the electrodes 4c₁, 4c₂, 4c₃ of the third electrode group.

Accordingly, the induced charge that has been diffused while the moving member 10 moves between the strip-form electrodes (i.e. moves a distance equal to the electrode pitch) is again induced (charged).

Next, the negative voltage -V is applied to the electrodes 4a₁, 4a₂, 4a₃ of the first electrode group, the negative voltage -V to the electrodes 4b₁, 4b₂, 4b₃ of the second electrode group, and the positive voltage +V to the electrodes 4c₁, 4c₂, 4c₃ of the third electrode group.

Then, the charge of the electrode and the induced charge come to have the same polarity, as has been explained with reference to Fig. 3(c), and due to the force of repulsion between them, the moving member 10 is driven to the right.

Thus the moving member 10 moves to the next position, as shown in Fig. 3(g), at which the charge on each electrode and the corresponding induced charge have different polarities; i.e., the moving member 10 moves one pitch to the right of that shown in Fig. 3(f) .

Next, as shown in Fig. 3(h), when the voltage of the electrodes 4b₁, 4b₂, 4b₃ of the second electrode group is set to 0 V from the state shown in Fig. 3(g), the charge at these electrodes 4b₁, 4b₂, 4b₃ becomes 0.

Thereafter the positive voltage +V is applied to the electrodes 4a₁, 4a₂, 4a₃ of the first electrode group, the negative voltage -V to the electrodes 4b₁, 4b₂, 4b₃ of the second electrode group and the negative voltage -V to the electrodes 4c₁, 4c₂ , 4c₃ of the third electrode group, as shown in Fig. 3(i).

Then, as described already with reference to Fig. 3(c), the moving member 10 floats due to the repulsion force and is driven to the right.

The moving member 10 is moved to the next position at which the charges of the electrodes and the respective opposed induced charges have different polarities, or in other words, the position one pitch movement from that of Fig. 3(j).

When, as shown in Fig. 3(k), the voltage of the electrodes 4c₁, 4c₂, 4c₃ of the third electrode group is changed to 0 V from the state shown in Fig. 3(j), the charge of these electrodes 4c₁, 4c₂, 4c₃ becomes 0.

From this position, the high resistance body layer 12 (moving member 10) can be moved back by the same method.

In other words, the negative voltage -V is applied to the electrodes 4a₁, 4a₂, 4a₃ of the first electrode group, the positive voltage +V to the electrodes 4b₁, 4b₂, 4b₃ of the second electrode group, and the positive voltage +V to the electrodes 4c₁, 4c₂, 4c₃ of the third electrode group, as shown in Fig. 3(ℓ) .

Consequently, the charge of each strip-form electrode and the induced charge have the same polarity and due to the resulting repulsion force, the moving member floats and is driven to the left. It is thus moved to the position of Fig. 3(m) at which the charges of the electrodes and the respective opposed induced charges have different polarities, that is, the position one pitch movement from that of Fig. 3(L).

Here, even if the moving member 10 attempts to move to the right, it cannot move to the right because the negative induced charge at the third electrode position 4c₁ and the negative charge on the first electrode 4a₂ repel each other.

Therefore, the moving member 10 is sequentially moved one pitch to the left to the different positions shown in Figs. 3(n) to 3(t).

In the description given above, the electrodes disposed on the stationary member are shown arranged in only one direction, but they can be disposed in various forms as will be explained hereinafter.

The dimensions and pitches of the stationary member and moving member and the number of their steps can be selected appropriately.

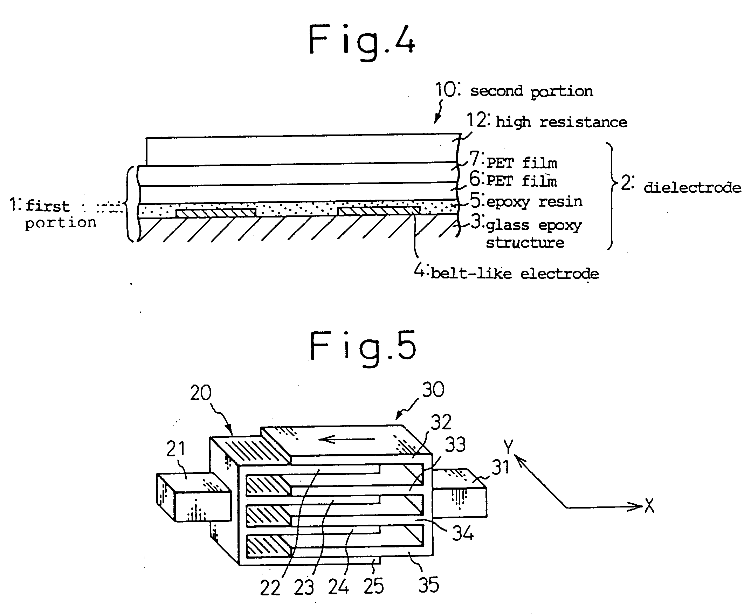

Next, a definite structural example of such an electrostatic actuator will be explained with reference to Fig. 4.

As shown in this drawing, the stationary member 1 is produced by forming by etching 100 strip-form electrodes 4 with gaps of 1.27 mm between them on a glass epoxy substrate 3, and covering them with an epoxy resin 5 and two 0.1 mm-thick PET (Polyethylene Terephthalate) films 6, 7 to obtain a dielectric 2.

Ordinary plain paper available commercially on the market is used as the moving member 10.

A voltage source for applying a voltage to the strip-form electrodes has V = 1 kilovolt (KV). The charging time (the time necessary for inducing the charge) is several seconds only at the initial stage but can be reduced down to one second from the second time and so on because the charge initially charged can be utilized.

When the voltage from the voltage source to each strip-form electrode is sequentially switched and applied to the electrodes as has already been explained with reference to Fig. 3, the ordinary plain sheet placed on the stationary member 1 can be moved.

Next, a laminate type actuator obtained by laminating the afore-mentioned electrostatic actuators will be explained.

Fig. 5 is a perspective view of the actuator described above. The stationary member 20 includes a base portion 21 to be fixed, and a plurality of films 22 - 25 branched and extended from this base portion 21 and equipped with strip-form electrodes in a Y direction. Films 32 - 35 consisting of a plurality of thin filmlike resistor bodies alone, which are connected to the base portion 31 to constitute the moving member 30, are placed on these films 22 - 25.

The volume resistance value of these films 32 - 35 is preferably in the range from 10⁹ to 10¹¹ Ωcm and this value is in the range 10¹³ to 10¹⁵ Ω/square in terms of surface resistance.

Here, the moving member 30 can be moved in the X axis direction by applying voltages to the strip-form electrodes disposed on the films 22 - 25 of the stationary member 20 in the voltage forms as shown in Figs. 3(b) to 3(d), for example.

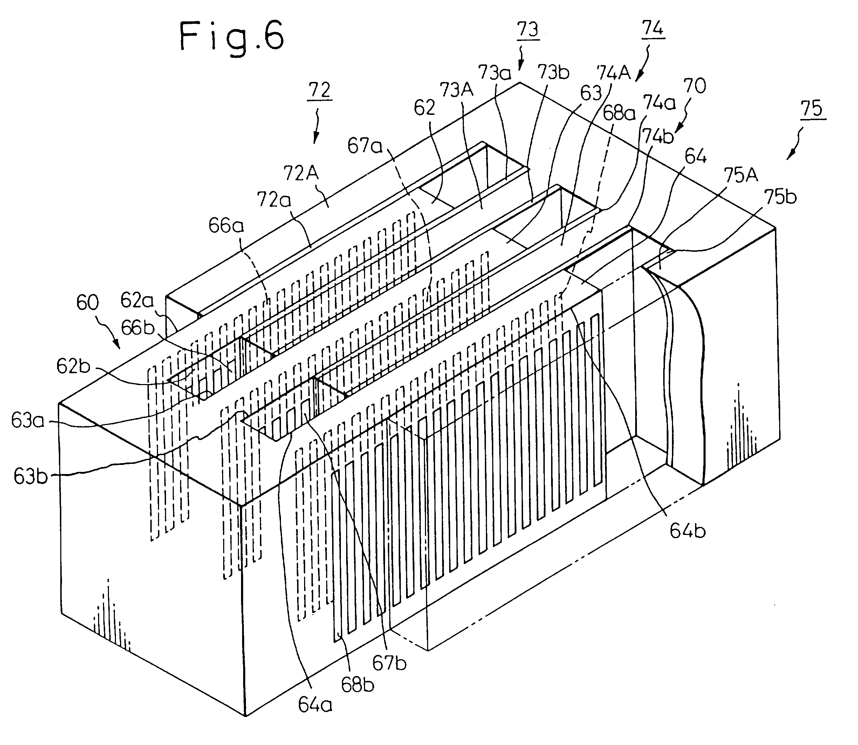

In this laminate type actuator, the strip-form electrode group 66a - 68a is disposed in the proximity of one of the surfaces 62a - 64a of the films 62 - 64 of the stationary member 60 and the strip-form electrode group 66b - 68b is disposed in the proximity of the other surface 62b - 64b as shown in Fig. 6.

On the other hand, the films 72 - 75 of the moving member 70 are insulating thin sheet-like members 72A-75A, and high resistance body layers 72a, 75b are bonded and fitted to one of the surfaces of the thin sheet-like member 72A and to the other surface of the thin sheet-like member 75A, respectively, as shown in Fig. 6.

The high resistance body layers 73a, 73b, 74a, 74b may be bonded and fitted to both surfaces of the thin sheet-like members 73A, 74A in the same way as described above, respectively.

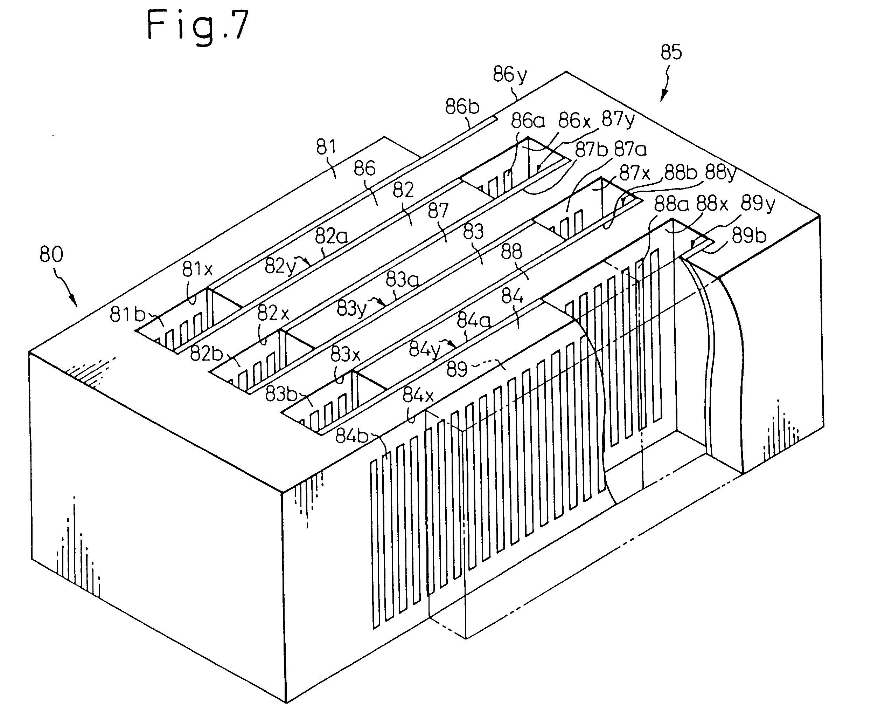

Furthermore, this laminate type actuator may be constituted as shown in Fig. 7.

In other words, each film 81 - 84 of the stationary member 80 is made of an insulating material such as PET, the strip-form electrode group 81b - 84b is buried in the proximity of one of the surfaces 81X - 84X and the thin film-like high resistance body layers 82a - 84a are bonded to the other surface 81y - 83y, as shown in Fig. 7.

On the side of the moving member 85, too, each film 86 - 89 is made of an insulating material such as PET, the strip-form electrode group 86a - 88a is buried in the proximity of one of the surface sides 86x - 88x, and the high resistance body layers 86b - 89b are bonded to the other surface side 86y - 89y.

When the laminate type actuator having the construction shown in Figs. 6 and 7 is employed, the power density can be improved much more than that of the laminate type actuator shown in Fig. 5.

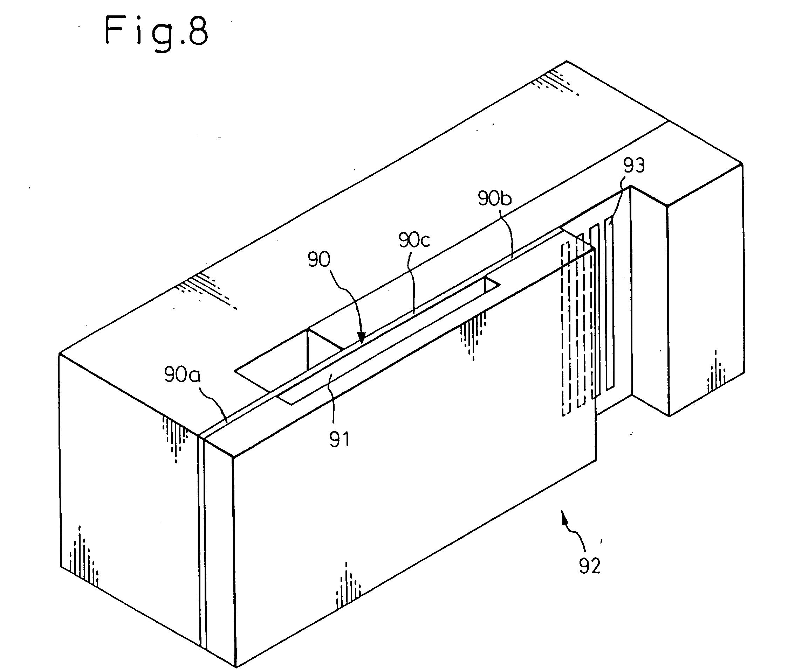

Each film portion of the laminate type actuators shown in Figs. 6 and 7 may be constituted as shown in Fig. 8 in order to prevent wrinkles of the high resistance body 90 as the moving member.

In other words, there is disposed a holding member 92 which holds both ends 90a, 90b of the high resistance body 90 and is composed of a rigid body having a recess 91 at the position corresponding to the intermediate portion 90c of the moving member 90 so that the high resistance body 90 can undergo deflection against the force of repulsion acting on the strip-form electrode group 93.

According to this arrangement, the high resistance body 90 is always held under tension and, hence, the wrinkles can be prevented.

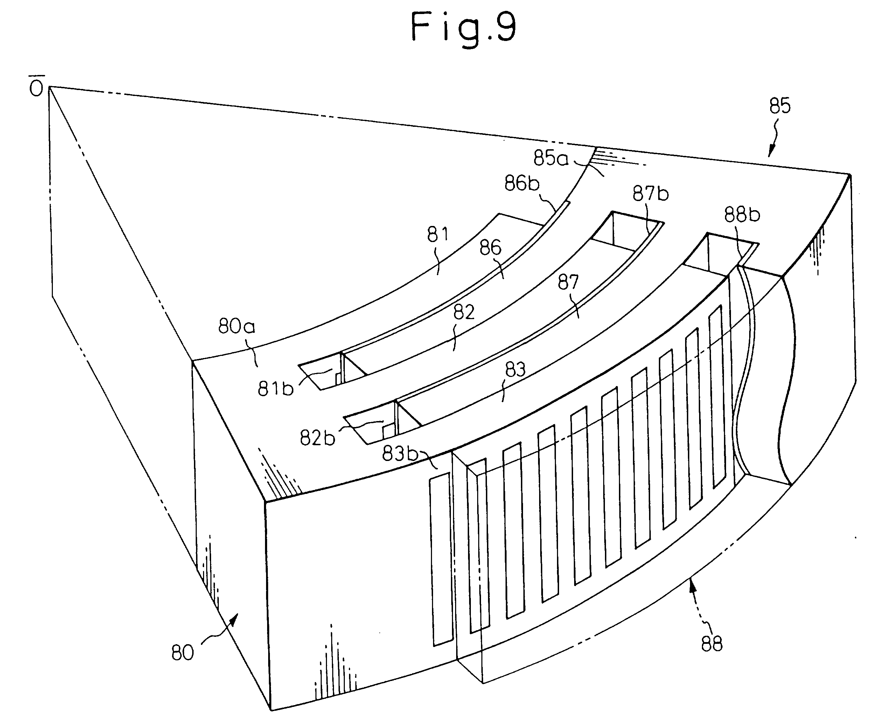

Incidentally, these laminate type actuators can be applied not only to the straight movement type but also to a rocking type by constituting the stationary member 80 and the moving member 85 in the curved form with the center O of the radius of curvature being the center as shown in Fig. 9.

In this case, the film portions 81 - 83 extending from the distal side portion 80a of the stationary member 80 are shaped in the arc form having their center O at the center of the radius of curvature, and the film portions 86 - 88 extending from the distal side portion 85a of the moving member 85 are shaped likewise in the arc shape having their center O at the center of the radius of curvature, with the thin film members 86b - 88b, in the same way as in the stationary member 80.

It is also possible to form strip-form electrodes which are arrayed across the working surface of the stationary member in the X and Y axis directions.

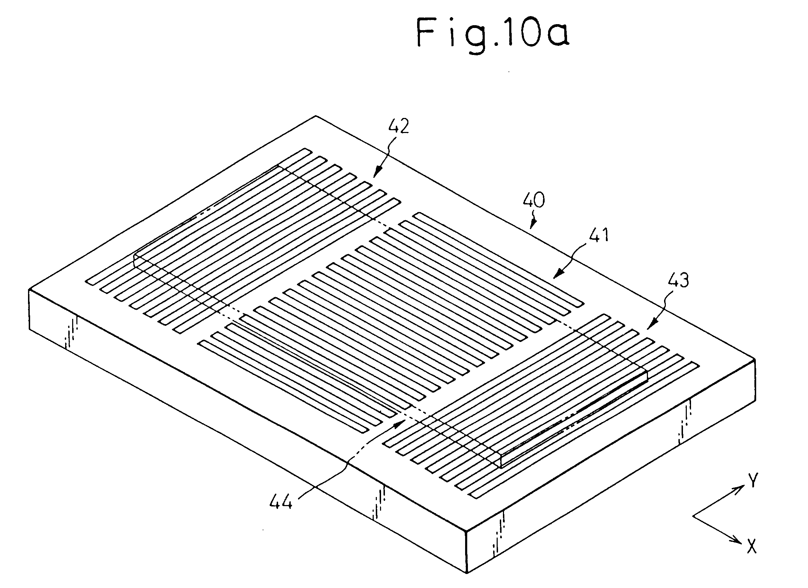

For example, as shown in Fig. 10(a), one pattern of strip-form electrodes 41 extending in the X axis direction and further patterns of strip-form electrodes 42, 43 extending in the Y axis direction are disposed on a stationary member 40.

Switching of the voltage to each of the patterns of strip-form electrodes 41 - 43 is individually made and in this way, a moving member 44 placed on them can be driven in the X axis direction and/or in the Y axis direction.

As shown in Fig. 10(b), two patterns of strip-form electrodes 46, 47 extending in the X axis direction and one pattern-of strip-form electrodes 48 extending in the Y axis direction may be disposed on the stationary member 40.

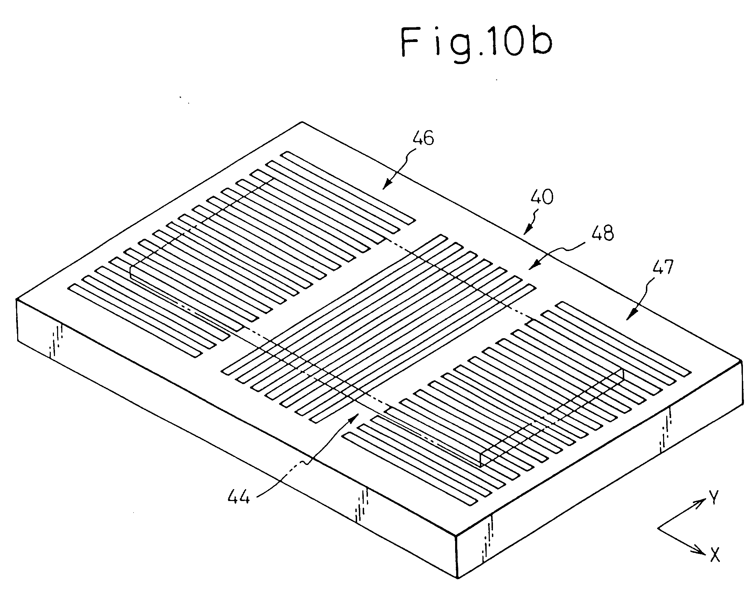

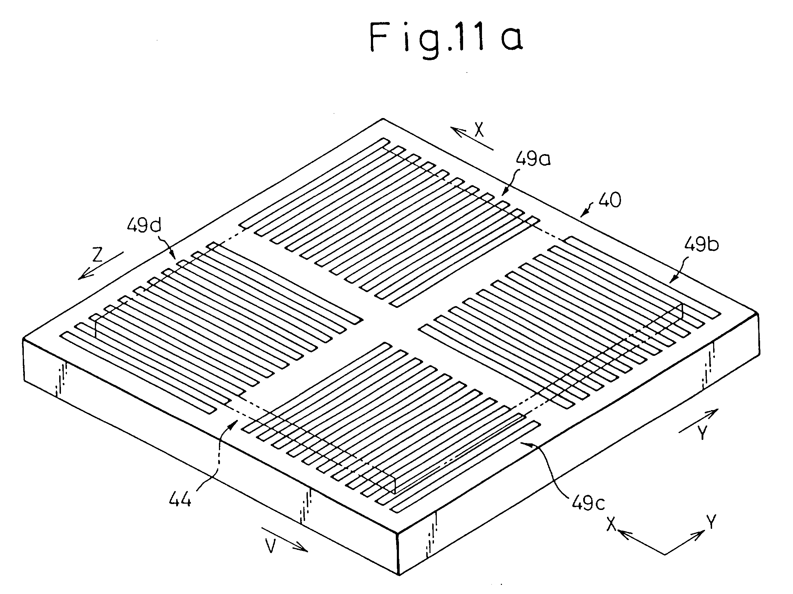

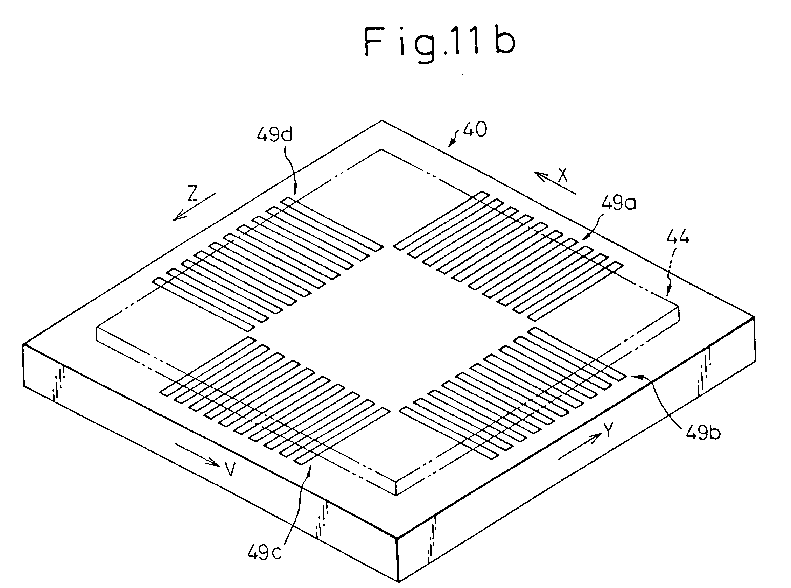

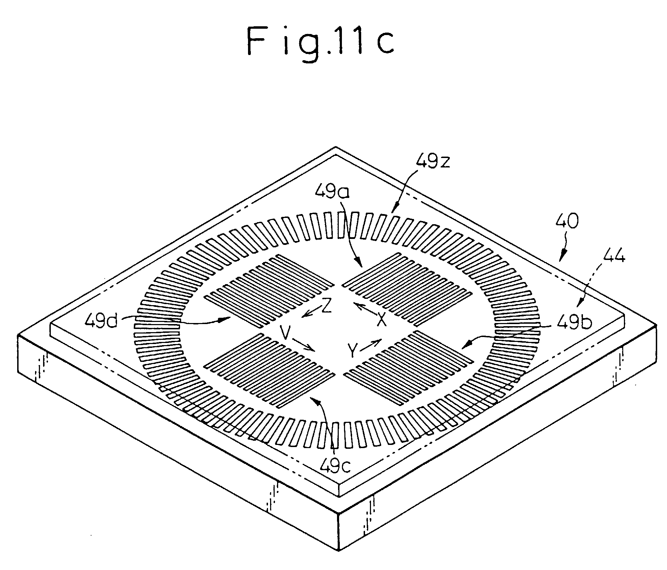

Furthermore, as shown in Figs. 11(a), (b) and (c), four patterns of strip-form electrodes 49a - 49d are disposed on the flat sheet stationary member 40, and the voltage patterns for these electrode patterns 49a - 49d can be individually switched.

According to this arrangement, the moving member 44 can be moved in the X axis direction by driving only the electrodes of patterns 49a, 49c.

The moving member 44 can be moved in the Y axis direction by driving only the electrodes of patterns 49b, 49d.

The moving element 44 can be moved in both X and Y directions by simultaneously driving both of the electrode patterns 49a, 49c and the electrode patterns 49b, 49d.

Furthermore, the moving member 44 can be rotated by switching the voltage patterns in such a manner as to drive the electrodes of patterns 49a and 49b in the V and Z directions represented by arrows, respectively.

Incidentally, as shown in Fig. 11(c), it is possible to dispose strip-form electrodes 49z radially, and to rotate the moving member 44 by switching the voltage patterns to these strip-form electrodes 49z.

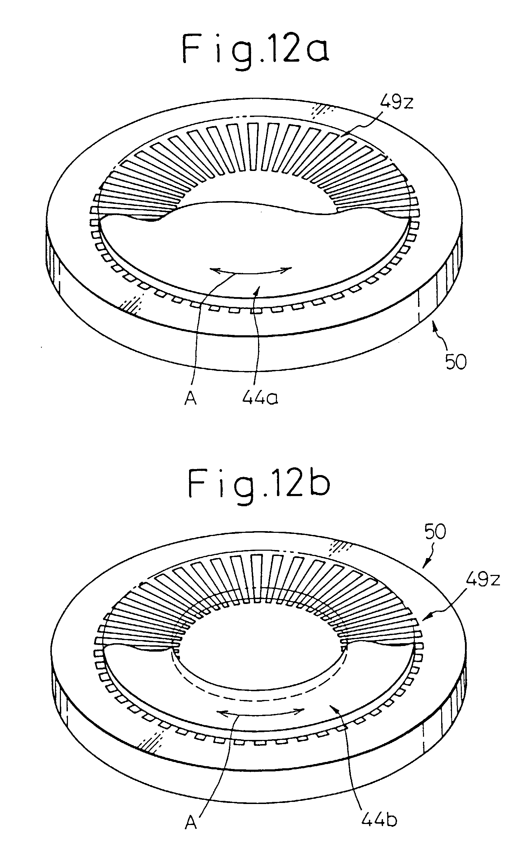

Furthermore, it is possible to shape the stationary member 50 in the form of a disc and to use only radial electrodes 49z as the strip-form electrodes as shown in Figs. 12a to 12e.

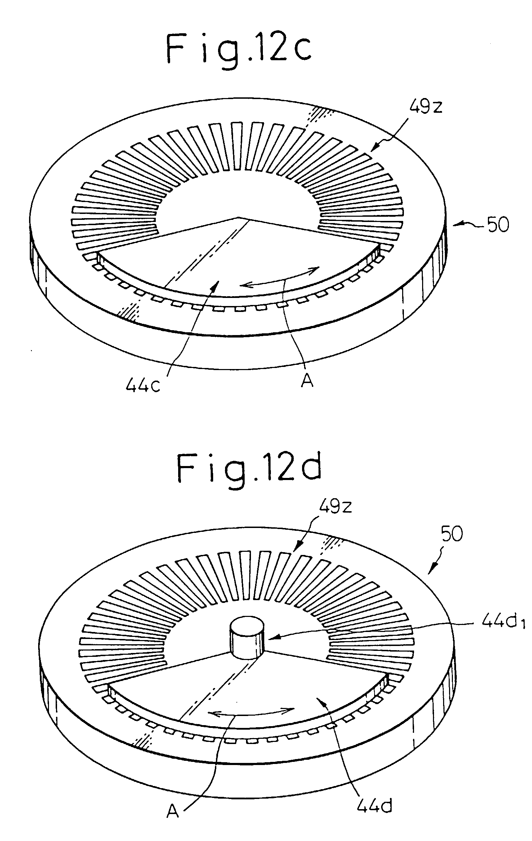

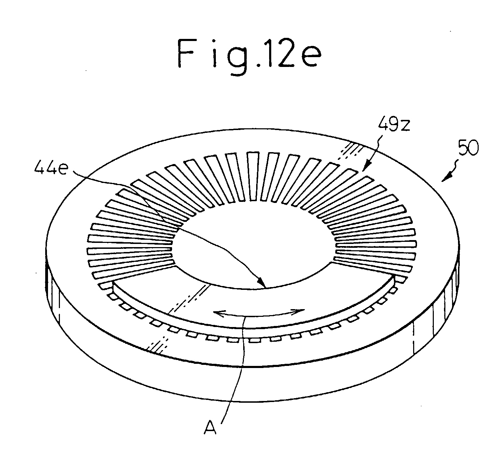

In these figures, a circular moving member 44a on the disc 50 (Fig. 12a), a ring-like moving member 44b (Fig. 12b), a fan-shaped moving member 44c (Fig. 12c), a fan-shaped moving member 44d (Fig. 12d) having a center shaft 44d₁ rotatably supported by a bearing, not shown, at the position of the center of rotation, and a curved flat sheet 44e (Fig. 12e) can be rotated or rocked in the direction represented by arrow A.

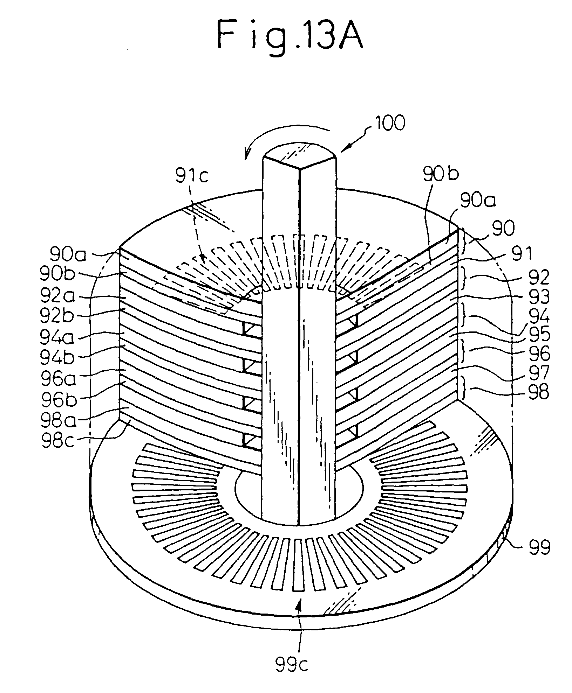

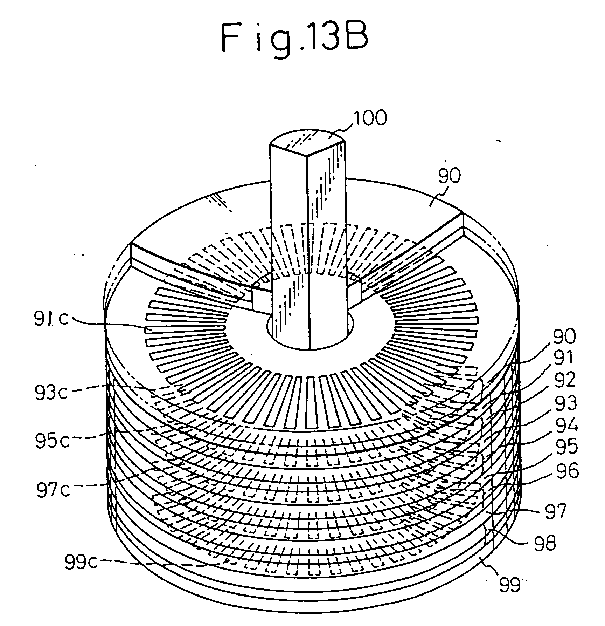

Fig. 13 shows the case where the rotary type shown in Fig. 12(a) is constituted as a laminate type.

In the drawing, a plurality of discs 90 - 99, each made of an insulating and flexible material such as PET, are shown laminated, and each of the discs 90, 92, 94, 96, 98 includes a main body portion 90a, 92a, 94a, 96a, 98a and a high resistance body layer (resistance element) 90b, 92b, 94b, 96b, 98b which is bonded to the lower surface side of the main body portion. In another embodiment, each of the main body portions 90a - 98a may be the high resistance body layer (resistance element) while each of the portions 90b - 98b may be composed of the insulating material layer. On the other hand, strip-form electrodes 91c, 93c, 95c 97c, 99c are radially disposed on each of the discs 91, 93, 95, 97, 99 in the proximity of the surface which opposes and comes into contact with the afore-mentioned high resistance body layer, respectively.

The discs 90, 92, 94, 96, 98 are fixed to a shaft 100, while the discs 91, 93, 95, 97, 99 are supported rotatably with respect to this shaft 100, but the latter are fixed by a suitable fixing member which is not shown in the drawing.

A voltage from a voltage pattern switching device, not shown in the drawing, is individually applied to each of the strip-form electrodes 91c - 99c by the use of a slide contact, or the like, through a hollow portion of the shaft 100.

In the construction described above, when the voltage patterns to be applied to the strip-form electrodes 91c, 93c, 95c, 97c, 99c of the discs 91, 93, 95, 97, 99 are switched, the discs 90, 92, 94, 96, 98 are allowed to displace stepwise with respect to the stationary discs 91, 93, 95, 97, 99. At this time, the discs 90, 92, 94, 96, 98 all rotate together and cause rotational displacement of the shaft 100.

Next, when the voltage patterns to be applied to the strip-form electrodes 91c, 93c, 95c, 97c, 99c are switched, the rotary discs 90, 92, 94, 96, 98 are allowed to displace stepwise with respect to the fixed discs 91, 93, 95, 97, 99. The shaft 100 can be rotated by sequentially repeating these operations.

In the embodiments of the present invention described above, it is of course possible to fix the discs 91, 93, 95, 97, 99 having the strip-form electrodes to the shaft 100 so as to rotate the shaft 100.

In this case, the sliding contacts for applying the voltages to the strip-form electrodes 91c - 99c can be omitted, and each disc 92, 94, 96, 98 is fitted at its outer periphery to a fixing portion which is not shown in the drawing.

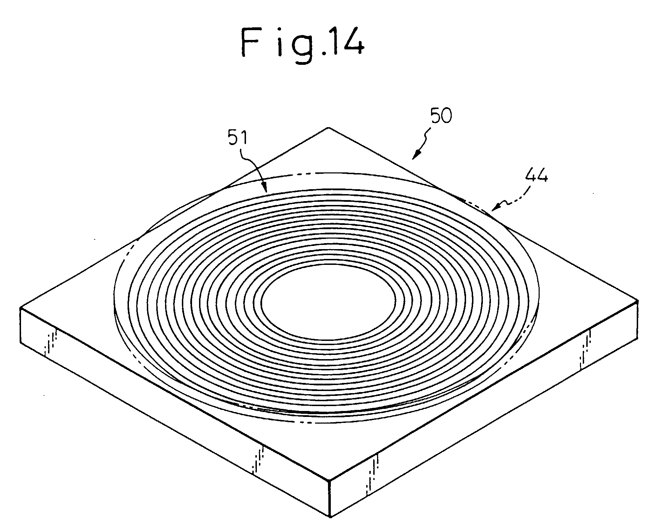

Furthermore, it is possible to dispose ring-like strip-form electrodes 51 concentrically on the stationary member 50 as shown in Fig. 14.

Though not shown in the drawing, a corrugated (wrinkled) round film (moving member) 44, for example, is placed on this stationary member 50. When a voltage which drives the film 44 in the radial direction is applied to the strip-form electrodes 51, the wrinkles of the film 44 can be smoothed out.

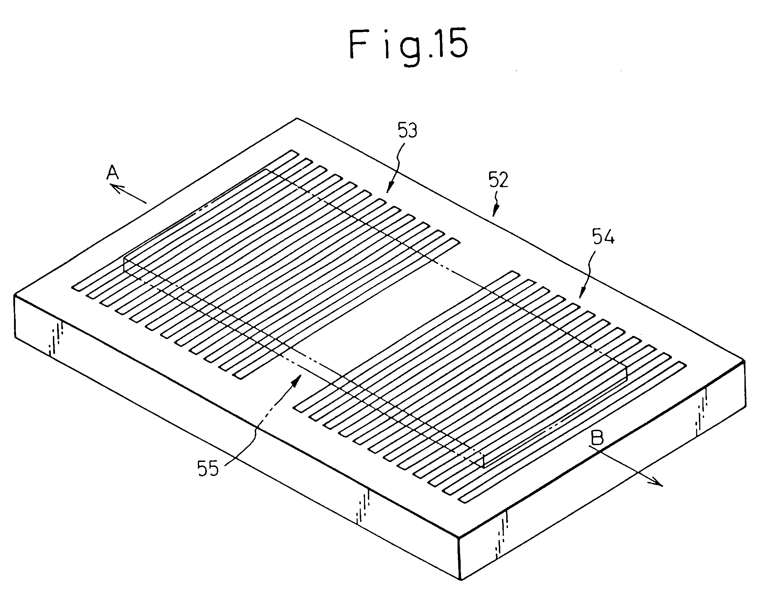

This wrinkle smoothing function can be achieved also in the following way. As shown in Fig. 15, two groups of strip-form electrodes 53, 54 are spaced apart on a stationary member 52. A corrugated (wrinkled) moving member 55 is placed on the stationary member 52. Voltage patterns which impart a moving force to the moving member 55 in the direction of arrow A for the strip-form electrodes 53 and in the direction of arrow B for the strip-form electrodes 54 are applied, and in this manner, the longitudinal and transverse wrinkles of the moving member 55 can be smoothed out.

This wrinkle smoothing function can also be accomplished by individually driving the strip-form electrodes 42, 43 shown in Fig. 10(a).

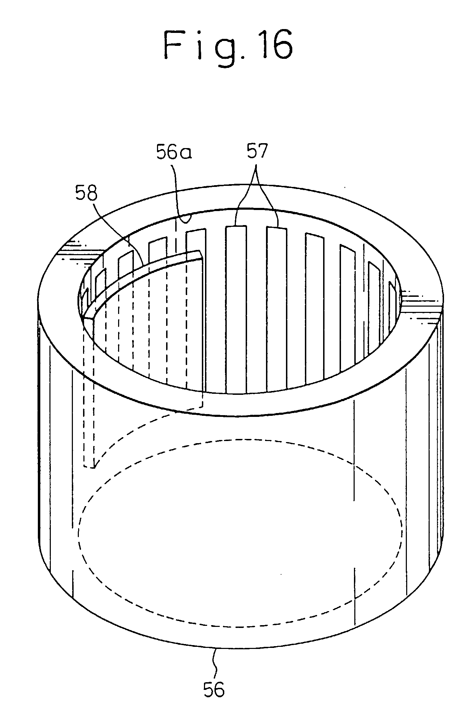

Fig. 16 shows an embodiment wherein the stationary member is a cylindrical stationary member 56. In this cylindrical stationary member 56, electrodes 57 such as those shown in Figs. 2 and 3 are buried in the axial direction of the cylindrical stationary member 56.

The film-like moving member 58 is disposed on the inner surface side 56a of the cylindrical stationary member 56. As described already, this moving member 58 consists of a flexible film such as PET, and for this reason, the moving member 58 can deflect by itself in such a manner as to extend along the inner surface of the cylindrical stationary member 56.

When the construction described above is employed and the voltage pattern to each electrode 57 is switched as has already been explained with reference to Fig. 3, the moving member 58 can be moved along the inner surface of the cylindrical stationary member 56.

When one of the end portions of this moving member 58 is bonded or fastened by a screw, or the like, to a shaft (not shown) which is rotatably supported, the electrostatic actuator shown in Fig. 16 can be changed to a rotary actuator capable of rotating this shaft. Incidentally, when this rotary actuator is constituted, too, a greater force can be generated by constituting the cylindrical stationary member 56 and the moving member 57 in a laminate form such as the one shown in Fig. 5.

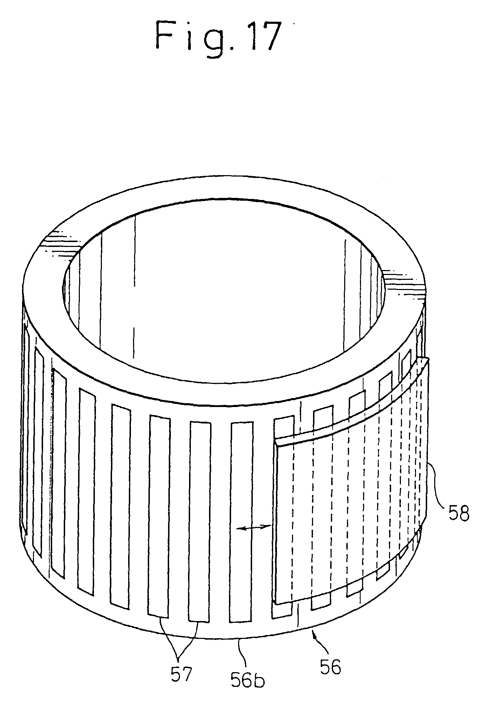

Furthermore, a construction in which the moving member 58 is disposed on the outer peripheral surface side 56b of the cylindrical stationary member 56 may be employed as shown in Fig. 17, as can a construction in which the moving force of this cylindrical stationary member 56 is allowed to act on the inner peripheral surface side 56a and outer peripheral surface side 56b of the cylindrical stationary member 56.

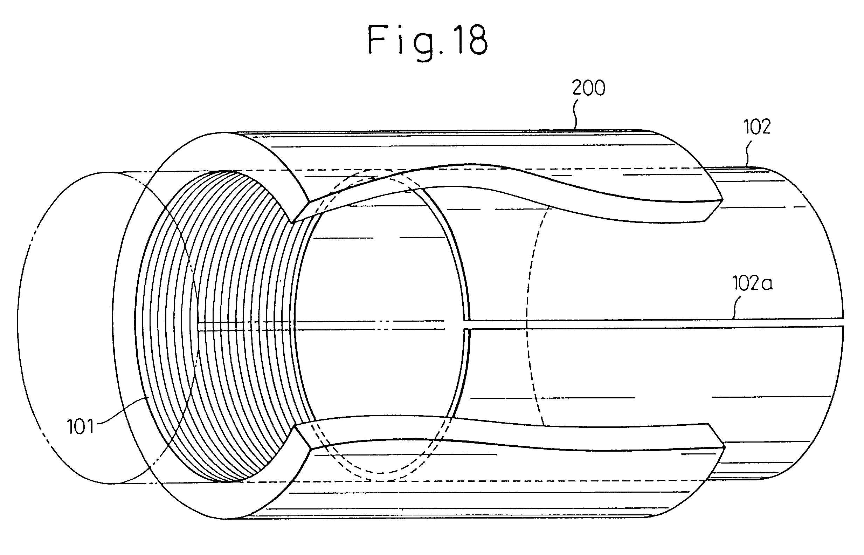

As shown in Fig. 18, strip-form electrodes 101 are disposed in a cylindrical stationary member 200 so as to extend along the peripheral direction of the stationary member 200, and a substantially cylindrical moving member 102 is inserted into the cylindrical stationary member 200 in such a manner as to come into close contact with the inner surface side of the latter.

According to this construction, the cylindrical moving member 101 can be made to reciprocate in the axial direction of the cylinder by switching the voltage patterns to the strip-form electrodes 101.

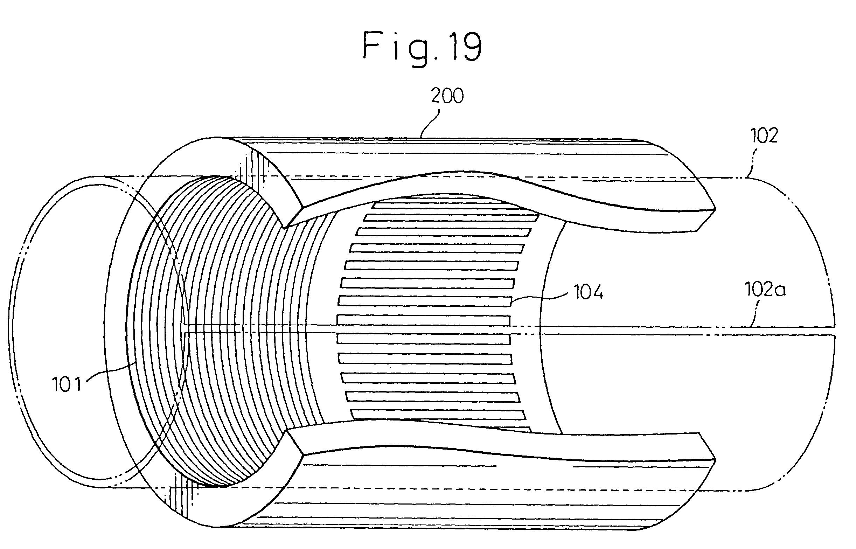

Furthermore, the cylindrical moving member 102 can be driven for rotation by additionally disposing the strip-form electrodes 104 on the cylindrical stationary member 200 in such a manner as to extend in the axial direction of the stationary member 200 as shown in Fig. 19.

Incidentally, the substantially cylindrical moving member 102 shown in each of Figs. 18 and 19 is fitted to a rotatably shaft member, or the like, which is not shown in the drawings, at its left end and/or its right end so that the driving (moving) force can be taken out. Moreover, a slit 102a is formed so as to extend in the axial direction of the cylinder, which still can absorb extension in the peripheral direction when the moving member 102 is subjected to repulsion force.

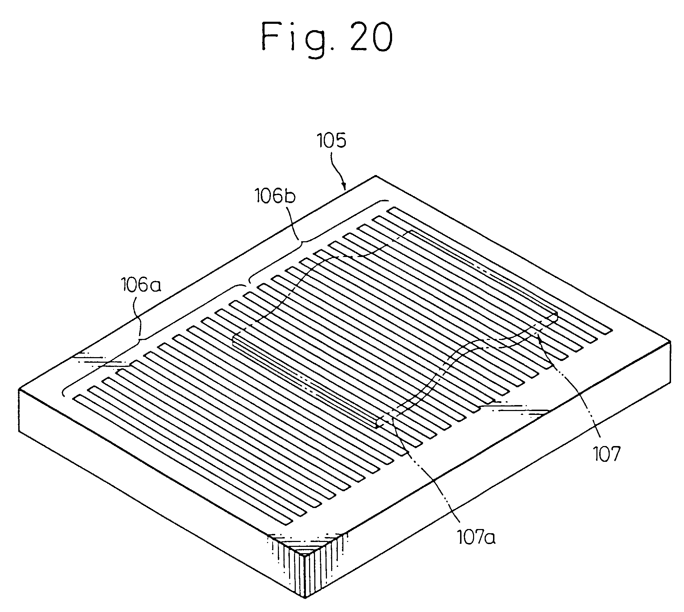

Furthermore, strip-form electrode groups 106a, 106b are disposed on the flat sheet-like stationary member 105 as shown in Fig. 20, and a voltage pattern switching device is disposed so that each electrode group 106a, 106b can be individually driven.

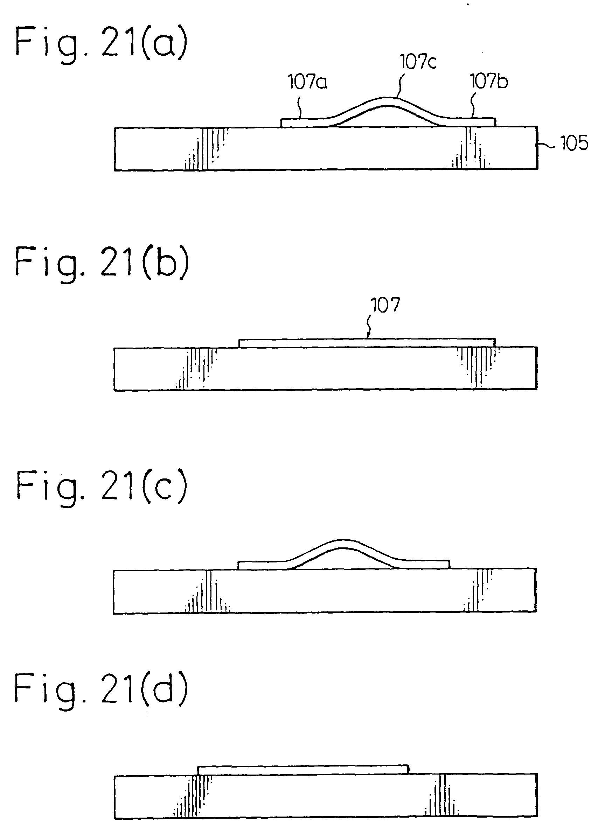

In this construction, the voltage patterns similar to those shown in Fig. 3 are first applied to the strip-form electrode groups 106a and 106b. Then, the voltage pattern such as shown in Fig. 3(m) is applied to only the strip-form electrode group 106b. Since the tip portion (leading portion) 107a of the sheet-like moving member 107 is at a halt under the attracted state to the strip-form electrode group 106a as shown in Fig. 21, its rear end portion (trailing portion) 107b is moved to the left as shown in Fig. 3(n). Accordingly, its center portion 107c floats up.

Next, the voltage pattern shown in Fig. 3(m) is applied only to the strip-form electrode group 106a in the same way as above. Then, since the rear end portion is in a state of attraction onto the stationary member 105, its tip portion 107a is moved to the left. Accordingly, the sheet-like moving member 107 is stretched as shown in Fig. 21(b) and comes into contact with the stationary member 105 throughout its entire surface.

When the operations described above are repeated, the sheet-like moving member 107 moves in a way similar to that of an inchworm as shown in Figs. 21(c) and (d).

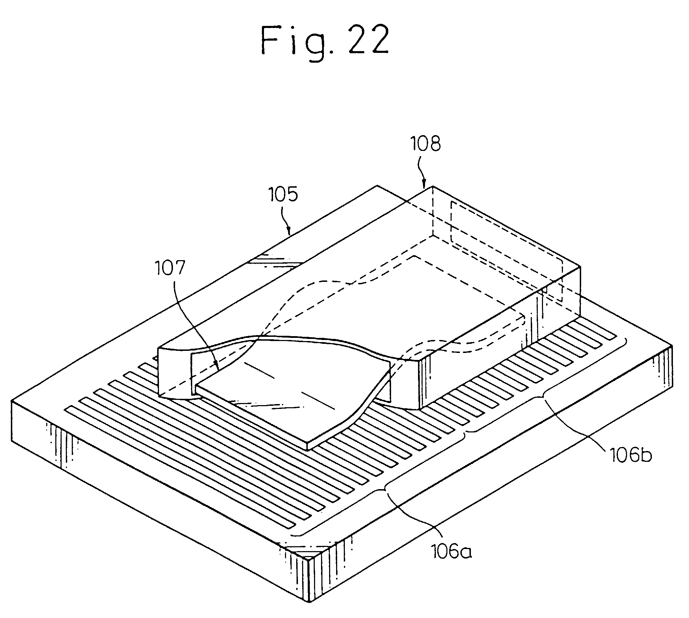

The sheet-like moving member 107 does not need electric wirings, and the like. Therefore, when the sheet-like moving member 107 is disposed inside a hollow piping 108 and the stationary member 105 is disposed outside this hollow piping 108 as shown in Fig. 22, for example, the sheet-like moving member 107 can be moved freely inside the hollow piping 108. In this case, if blades are fitted to the sheet-like moving member 107, cleaning of the piping can be carried out. If a push plate is fitted, transfer, extrusion, and the like, of articles can be made inside the piping.

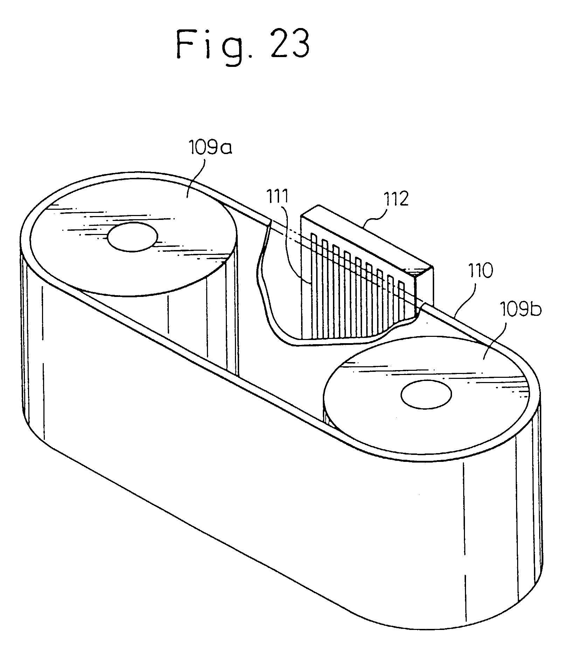

Fig. 23 shows an embodiment wherein the moving member is constituted in an endless belt form.

As shown in the drawing, a moving member 110 made of a high resistance body (resistance element) in endless belt form is wound between and around rotary rollers 109a and 109b.

A stationary member 112 having strip-form electrode groups 111 disposed thereon is interposed between the rollers 109a and 109b.

According to this construction, an article or articles placed on the endless belt-like moving member 110 can be transported.

Sheets of paper placed on the surface of the endless belt, too, can be transported by the force of friction between the endless belt and the article and/or by the force of attraction of the electrostatic charge generated on the surface of the endless belt.

Furthermore, when two sets of mechanisms shown in Fig. 23 are disposed in such a manner that the endless belt-like moving members 110 can come close to, or come into contact with, each other, sheet-like articles such as sheets of cut paper can be clamped and transported between them.

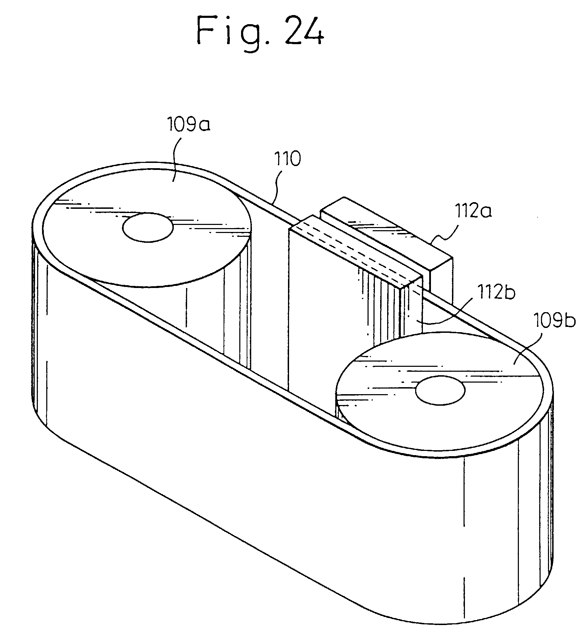

Two stationary members 112a, 112b having the strip-form electrode groups 111 may be disposed on both sides of the endless belt-like moving member 110 which is constituted by interposing the high resistance body layer (resistance element) between two insulating films, as shown in Fig. 24.

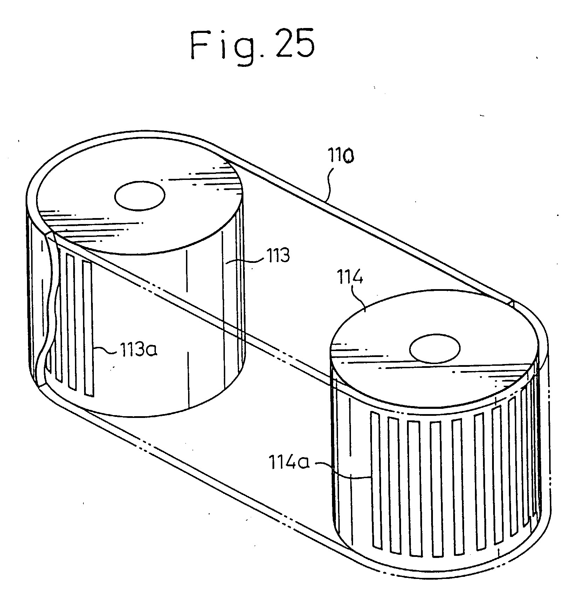

As shown in Fig. 25, further, the endless belt-like moving member 110 can be driven for rotation by burying strip-form electrode groups 113a, 114a into respective cylindrical members 113, 114 made of an insulating material and disposed fixedly.

In a further alternative, when the strip-form electrode groups 115a, 116a are buried in respective drive and follower rollers 115 and 116 that are driven for rotation by a driving source (motor), not shown in the drawing, and are made of an insulating material, a main feed operation can be carried out by driving the rollers using the driving source (not shown), and a fine feed operation can be carried out by means of the strip-form electrode groups.

Next, as another embodiment of the present invention, an embodiment using a structure wherein a spherical portion is formed at part of each of the first and second members will be hereinafter illustrated.

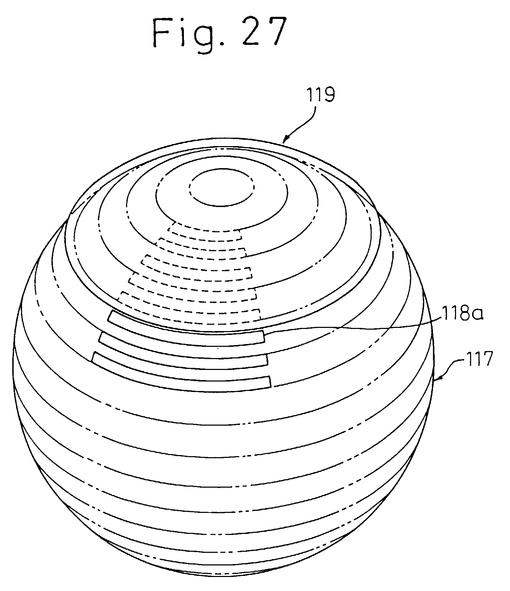

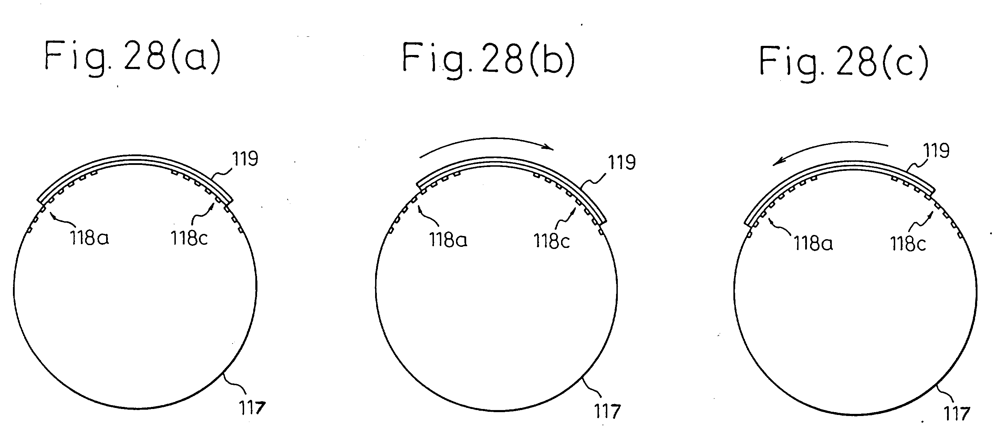

Fig. 27 shows an embodiment wherein the stationary member is spherical, and Fig. 28 is its sectional view. A plurality of strip-form electrode groups 118a - 118d having strip-form electrodes disposed in the proximity of the surface of the spherical stationary member 117 in a latitudinal direction, that is, concentrically with one another with the apex of the sphere being the center, are disposed. These strip-form electrode groups 118a - 118d are disposed in such a manner that each group has a 90° band of longitude (though only the strip-form electrode group 118a is shown in Fig. 27), so that the voltage patterns can be individually applied to them.

A hemi-spherical moving member 119 consisting of insulating material and a high resistance body layer (resistance element) laminated on the insulating material is put onto this spherical stationary member 117.

Then, as shown in Fig. 28, a pair of strip-form electrode groups 118a and 118c or a pair of strip-form electrodes 118b and 118d are driven in the same way as the strip-form electrode groups 42, 43 shown in Fig. 10. In this way, it is possible to move the moving member 119 from the state shown in Fig. 28(a) to the right as shown in Fig. 28(b), and to move it to the left as shown in Fig. 28(c) .

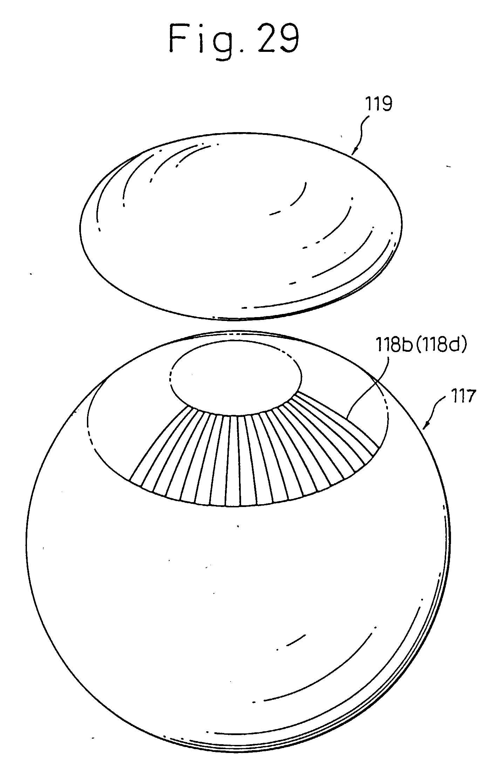

The function of rotating the hemi-spherical moving member 119 can be added by disposing a pair of strip-form electrode groups 118b and 118d in such a manner as to extend in the longitudinal direction or in other words, in the radial direction from the apex, as shown in Fig. 29.

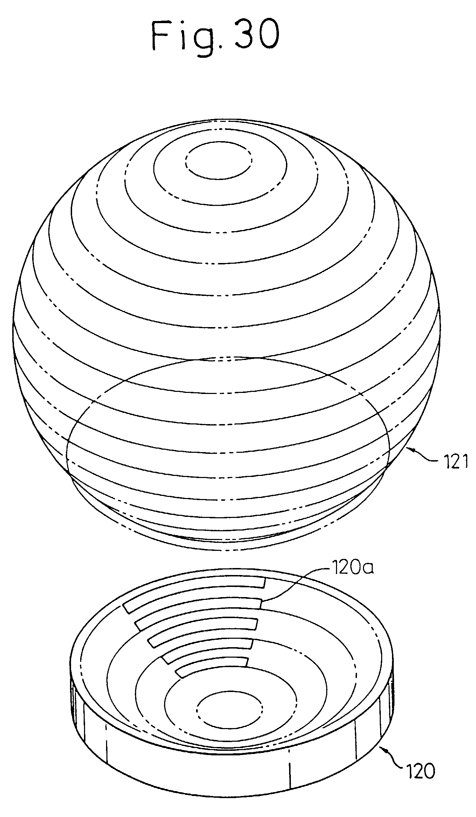

Furthermore, the stationary member may be a conical hemi-spherical stationary member 120 as shown in Fig. 30.

A plurality of strip-form electrode groups 120a - 120d having strip-form electrodes buried so as to extend in the latitudinal direction are buried in the proximity of the surface of a recess portion of the conical stationary member 120 in the same way as in Fig. 27. The spherical moving member 121 is placed on this conical stationary member 120. Preferably, this spherical moving member 121 is a hollow ball consisting of a high resistance body.

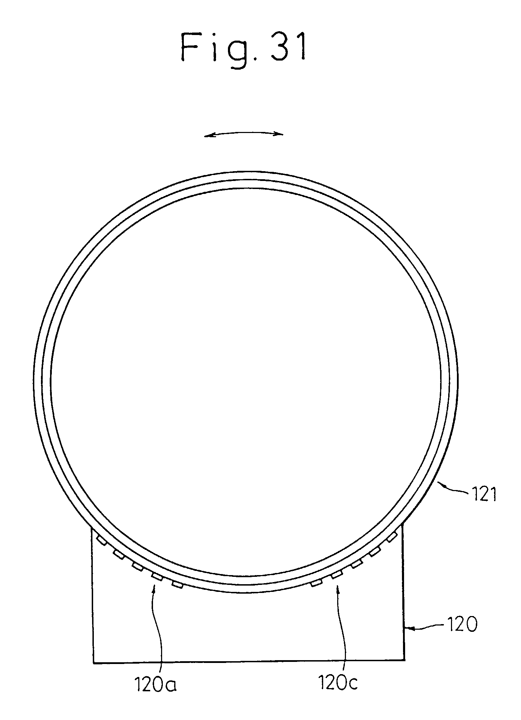

As shown in the sectional view of Fig. 31, each of the strip-form electrode groups 120a - 120d is driven in the same way as in Fig. 28 and in this way, the spherical moving member 121 can be rotated and moved on the conical stationary member 120.

Accordingly, when a map pattern of the earth, for example, is formed on the surface of the spherical moving member 121, an arbitrary position on the map can be located at the position at which it can be seen most easily, without any limitation such as a support arm of a conventional world globe.

When only a pair of strip-form electrode groups 120b and 120d are shaped as the electrode groups that extend in the latitudinal direction of Fig. 29, the function of rotating the spherical moving member 121 can be added, as well.

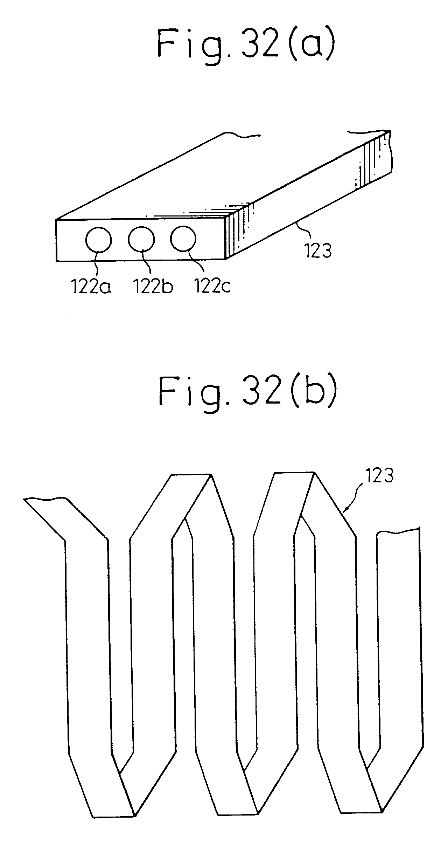

Incidentally, the strip-form electrode groups shown in Figs. 27 and 30 that are disposed in the stationary member may be produced by burying and wiring independently three power supply lines 122a - 122c in a flat sheet-like cable made of an insulating material, as shown in Fig. 32(a), then folding this cable as shown in Fig. 32(b), and bonding the folded cable onto the spherical surface or recessed surface of the spherical or conical stationary member.

In this case, since the power supply lines are round wires, the breakdown voltage can be improved and a treatment for preventing arcing between the three-phase wires becomes unnecessary.

As has already been explained with reference to Fig. 3, the force for moving the moving member can be generated by effecting at least three-phase wiring for the strip-form electrodes disposed on the stationary member. For two phases, the connection lines for interconnecting the strip-form electrode sets of each phase and connecting them to the driving control circuit can be disposed without the lines crossing over one another by wiring them mutually in the comb shape on a single surface.

When the lines for all three phases are wired on a single surface, however, the lines of the different phases cross over one another, so that insulation must be secured at the crossover points.

When the strip-form electrodes are formed in a miniature pattern by utilizing the thin film formation technique, defects are likely to occur in the insulating film and inferior insulation is likely to occur because the insulation distance at the crossover portions is small and steps exist due to the difference of the film thickness. However, when a thick insulating film is formed, on the contrary, in order to secure sufficient insulation, a longer film formation time is necessary and its through-hole formation step becomes much more troublesome.

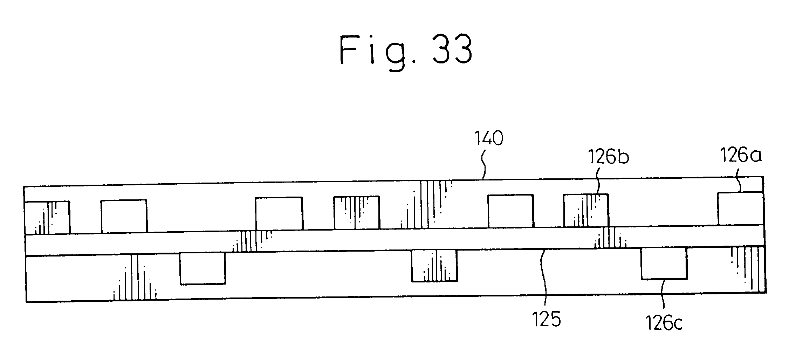

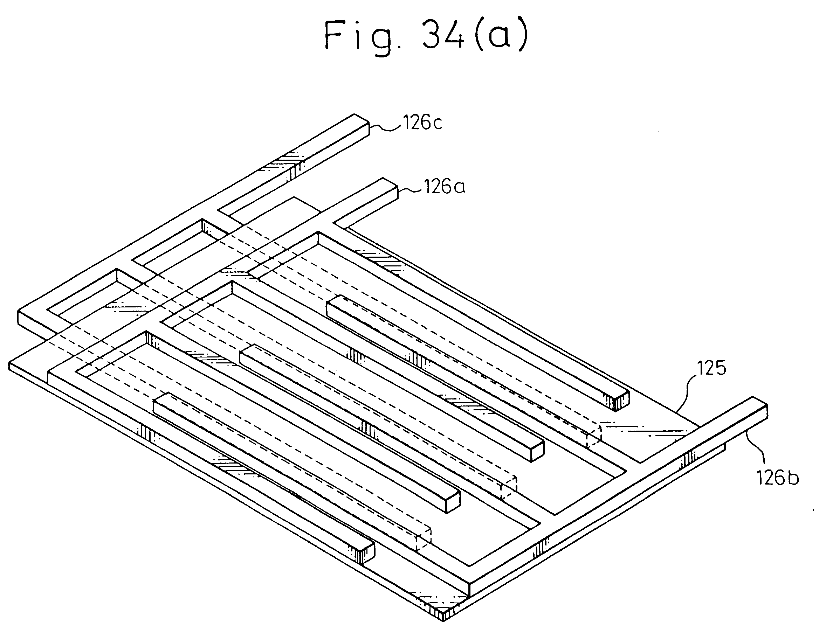

In order to solve these problems, the strip-form electrodes 126a of the first phase and the strip-form electrodes 126b of the second phase are disposed on one of the surfaces of the insulating material 125 while the strip-form electrodes 126c of the third phase are formed on the other surface, as shown in Fig. 33.

When the voltages +V, 0 and -V are sequentially switched and applied to these strip-form electrodes 126a - 126c of the first, second and third phases, the moving member, disposed on the stationary member 140 so as to face the latter, can be moved.

Incidentally, the strip-form electrodes 126c of the third phase have a greater distance to the moving member than the strip-form electrodes of the other phases due to the thickness of the insulating material 125.
Accordingly, the quantity of the charges that can be induced on the surface of the moving member is small and the generated force is small.

However, this difference in the moving force can be reduced to a range in which no problem occurs, by setting the voltage to be applied to the strip-form electrodes 126c of the third phase to a voltage higher than the voltages to be applied to the strip-form electrodes 126a and 126b of the first and second phases.

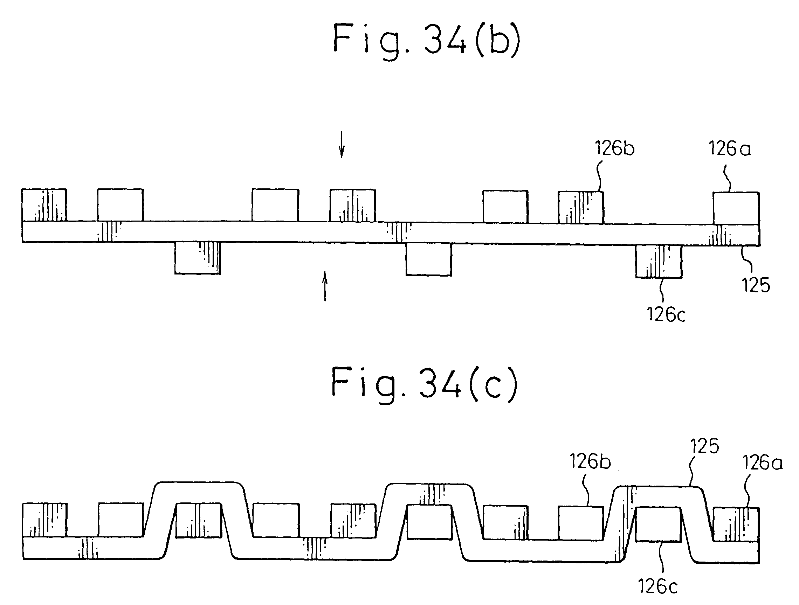

The formation of the lines of the three-phases is carried out by bonding the first and second power supply lines (e.g. the +V power supply line and the 0 V power supply line) 126a, 126b to the upper surface of the flexible sheet-like insulating material 125 and the third power supply line (e.g. the -V power supply line) 126c to the lower surface as shown in Fig. 34(a), and pressing these lines from both sides as shown in Fig. 34(b), whereby each of the power supply lines 126a - 126c, particularly the +V power supply line 126a and the -V power supply line 126c, can be separated by the deformed insulating material 125 as shown in Fig. 34(c). Incidentally, it is advisable to soften the insulating material 125 by heat-treatment, or the like, before the press force is applied.

According to the construction described above, the distance between the strip-form electrodes of the first to third phases, on the one hand, and the moving member, on the other hand, can be made constant.

The structure on the stationary member side for moving the moving member is not particularly limited to the strip-form electrodes of three-phase wiring shown in Fig. 3.

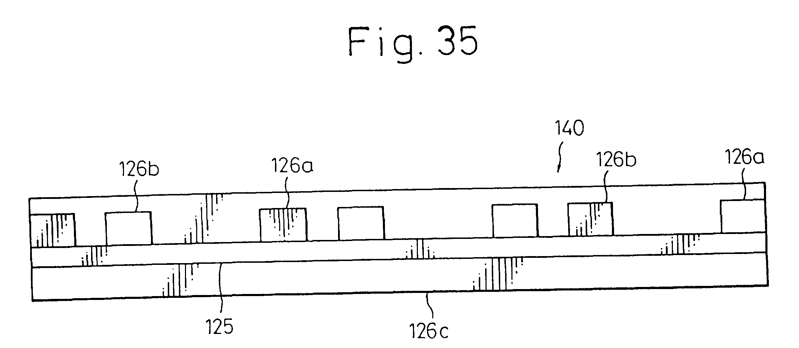

For example, a moving member supported on a stationary member can be moved by employing a unified electrode for the third phase formed on the other surface of the insulating material 140 as shown in Fig. 35. In this case, switching and sequential application of the voltage patterns to the first and third phases is still carried out in the manner described above.

As shown in Fig. 36, the unified electrode 126c that is formed uniformly on the entire surface of the other surface of the insulating material 140 is grounded.

The moving member 150 can be moved by sequentially switching and applying the voltages to be applied to the electrode group 126a of the first phase and to the electrode group 126b of the second phase to +V, 0 and -V.

In other words, as shown in Fig. 36(a), the +V voltage is first applied to the electrode group 126a of the first phase and the -V voltage is applied to the electrode group 126b of the second phase. Accordingly, as has already been explained with reference to Fig. 3, the charge is induced at the respective positions opposite the electrodes 126a, 126b on the high resistance body (resistance element) of the moving member 150.

Next, as shown in Fig. 36(b), the 0 V voltage is applied to the electrode group 126a of the first phase and the -V voltage is applied to the electrode group of the second phase.

Then, the charge of the electrode group 126a of the first phase disappears, and the positive charge is immediately induced at the electrode group 126b of the second phase. However, the charge that is induced on the moving member 150 cannot immediately move because the moving member 150 has the high resistance body.

Accordingly, the force of repulsion acts between the positive charge of the electrode group 126b of the second phase and the positive charge on the moving member 150, and the moving member 150 receives the force in the floating direction and floats up from the stationary member 140, with the result that the friction between the stationary member 140 and the moving member 150 is drastically reduced.

On the other hand, since there is also a force of attraction between the negative charge induced on the moving member 150 by the electrode group 126a of the first phase and the positive charge of the electrode group 126b of the second phase, the moving member 150 moves be moved to the right in Fig. 36(c).

Furthermore, in order to move the moving member 150 to the right in the drawing, the -V voltage is applied to the electrode group 126a of the first phase and the 0 V voltage is applied to the electrode group 126b of the second phase.

Accordingly, a force of attraction acts between the positive charge induced on the moving member 150 and the negative charge induced to the electrode group 126a of the first phase, and hence, the moving member 150 moves to the right in the drawing.

When the voltages are applied as shown in Fig. 36(a), the moving member 150 moves by a distance corresponding to one phase pitch of the electrode groups and attains the same state as that of Fig. 36(a) .

Accordingly, when the operations described above are repeated, the moving member can be sequentially moved to the right.

In order to move the moving member to the left in the drawing, on the other hand, it is possible to apply the reverse voltages to the voltages described above to the electrode groups 126a, 126b of the first and second phases.

In other words, the moving member 150 can be moved to the left in the drawing by applying the negative voltage to the electrode group 126a of the first phase and the 0 V voltage to the electrode group 126b of the second phase under the state shown in Fig. 36(a).

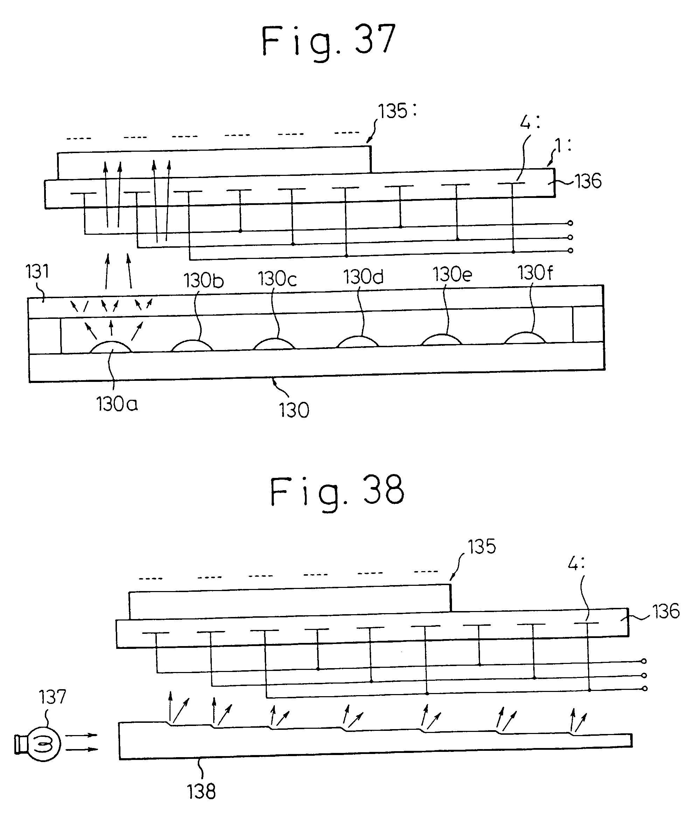

Fig. 37 is an explanatory view of an electrostatic actuator that utilizes light.

In this drawing, the differences from Fig. 3 are that the moving member is a moving member 135 made of a resistance body having photoconductivity, the insulating material is a transparent or translucent insulating material 136 and a light source 130 is disposed below the insulating material 136.

This light source 130 comprises a plurality of discrete light emission devices 130a - 130f such as LED devices, discharge fluorescent lamps, or the like, and a diffuser plate 131 interposed between the discrete light emission devices 130a - 130f and the insulating material 136.

The operation of this electrostatic actuator will be explained.

To begin with, the light source 130 is driven so that the rays of light emitted from the light source 130 irradiate the full surface of the photoconductive moving member 135 through the diffuser plate 131.

Accordingly, the electric resistance of the photoconductive moving member 135 is drastically reduced by the irradiation of light and the charge is easily movable under this stage.

When the voltages such as shown in Fig. 3(a) are applied to the strip-form electrode 4 under this state, the charge having the opposite polarity to that of the opposed strip-form electrode 4 concentrates quickly on the moving member 135 at the position opposite the strip-form electrode 4 concerned.

Next, driving of the light source 130 is stopped and the irradiation of light to the photoconductive moving member 135 is also stopped so as to make the surroundings dark. Accordingly, the photoconductive moving member 135 becomes an extremely excellent resistance body.

When the voltage patterns applied to the strip-form electrodes 4 are switched under this stage as shown in Fig. 3(b), the charges on the strip-form electrodes can immediately change, but the charge on the moving member 135 cannot immediately change.

Therefore, the moving member 135 can be moved to the right as shown in Figs. 3(c) and 3(d).

In order to move the moving member 135 further to the right, the voltage patterns shown in Fig. 3(e) are applied whilst the moving member is irradiated by light, and thereafter the same operation as described above is repeated. This procedure also works in the case in which the moving member 135 is to be moved to the left.

Besides the afore-mentioned local light emitter, a surface light emission device can also be used as the light source.

The highest efficiency can be obtained by disposing the light source above the moving member.

However, even when the light source is disposed below the light source as shown in Fig. 37 and any shade portions for the strip-form electrodes develop, it is only the portions where the charge moves that need photoconductivity. Accordingly, the Figure 37 arrangement can be put to practical use. In Fig. 37, both the strip-form electrodes and the light source can be disposed on the stationary member side. Accordingly, the feed of power can be carried out on the stationary member side.

The irradiation of light can be made to the moving member 135 from the side of the arrangement by utilizing diffraction of light or by using a member 138 having an upper surface shaped for redirecting (diffusing) the rays of light from a light source 137 disposed at the end surface of the member 138, into a direction perpendicular to that upper surface, as shown in Fig. 38.

Such a light irradiation method can be applied, too, to the laminate type electrostatic actuators shown in Figs. 5 to 7, etc.

In the electrostatic actuators described above, the length of the moving member must be at least a length that bridges between a plurality of strip-form electrodes.

Speaking conversely, the minimum length of the moving member that can be used is determined in accordance with the pitch of (gap between) the strip-form electrodes.

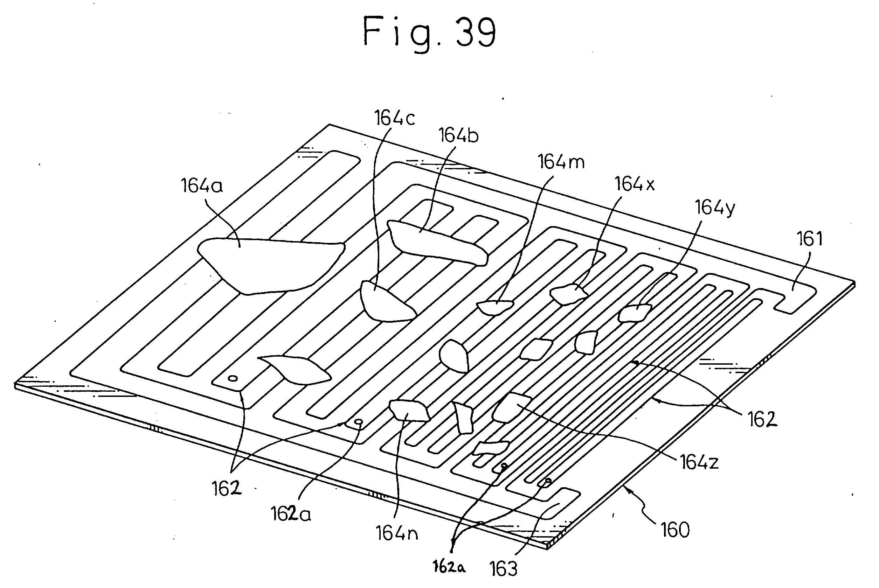

Accordingly, if an arrangement is used in which the pitch of the strip-form electrodes increases progressively from a smaller pitch to a greater pitch as shown in Fig. 39, the moving member cannot move any more when it reaches the point at which the pitch corresponds to its size.

In other words, a comb-like electrode 161 to which the voltage of the first phase is applied and a further comb-like electrode 163 to which the voltage of the third phase is applied are mounted onto the insulating substrate 160.

Strip-form electrode groups 162 are mounted between the comb-like electrodes 161 and 163. The strip-form electrode groups 162 are connected on the back side through through-holes 162a formed at one of the ends of the electrodes so that the voltage of the second phase can be applied thereto.

As can be seen clearly from Fig. 39, the gap (pitch) between the electrodes becomes progressively greater towards the left upward direction in the drawing. The electrodes are insulated from one another.

In the construction shown in Fig. 39, the voltage pattern to be applied to each electrode is switched in the same way as in Fig. 3.

Then, big and the small moving members (laminate electrically-resisting bodies) 164a, 164b, 164c, ... are placed initially on the right-hand portion of the insulating substrate 160 (constituting the stationary member) at which the electrode pitch is smallest, and are moved to the left in the drawing due to the action between the charge patterns induced to the surface and the charge of the strip-form electrodes.

In this electrostatic actuator, the charge patterns of at least three phases must be formed on the moving member. Therefore, the moving members 164x, 164y, 164z, ... having small sizes remain and stay at the right hand side of the insulating substrate 160, whilst the bigger moving members 164a, 164b, ... move to the left hand side of the insulating substrate 160.

Accordingly, the sizes of the moving members can be classified.

The moving members can be paper moving members or plastic moving members and they can be classified in accordance with their sizes. Moreover, since the distance moved varies in accordance with the electric resistance of the moving members, they can also be classified in accordance with electric resistivity.

The moving members can be classified in accordance with their specific density, too, from the relation between their moving time and the internal electric time constant. Therefore, dust of the kind which has not been easy to classify by the conventional electromagnetic classification, such as non-magnetic materials approximate to dielectrics, composite materials, and so forth, can be classified by adding this station to a classifier, whereby the objects which can be discriminated can be drastically expanded.

The specific gravity, electric conductivity, specific dielectric constant, etc., of the moving member can be classified, as well, by taking into consideration such factors as the driving frequency, the relation between the driving direction and the direction of the gravitational force, the relation of the external forces such as between the driving direction and the direction of the wind, and so forth, in addition to the gap (pitch) between the adjacent strip-form electrodes, during the classification.

If the stationary member is inclined from the horizontal the weight/area ratio can also be classified because only those moving members that are subject to a resultant force greater than the opposing gravitational force on the moving members move.

Whether or not the article has moved can be determined by the use of a photoelectric sensor the axis of detection of which passes between the strip-form electrodes. The movement of the moving member can be detected by-disposing such photoelectric sensors between also the strip-form electrodes and detecting the change of the detection output of each photoelectric sensor. In this case, a known transparent or high transmissivity insulating material can be used as the stationary member.

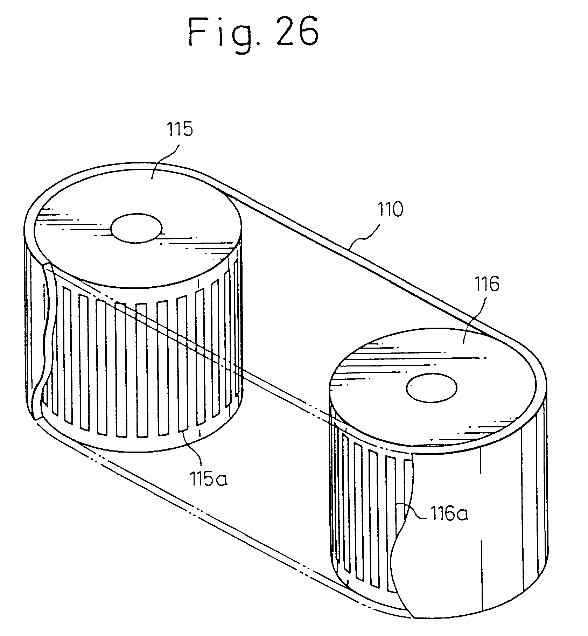

Though the explanation with reference to Figs. 9 to 38 explains the case where only the high resistance body is used as the moving member, the high resistance body layer may be laminated on the insulator layer when the moving member has the structure shown in Figs. 9 to 38.

Though the description given above explains only the case where the PET film is used as the insulating film, the present invention is not limited to the PET film and needless to say, any suitable flexible thin film having an insulating property can be used.

Furthermore, when the contact surface of either one of the stationary member and the moving member is a flat surface and corrugations are formed on the contact surface of the other, the friction between them can be reduced. Furthermore, when the moving member receives the force in the floating direction due to the force of repulsion between the induced charge and the charge of the strip-form electrodes on the stationary member side, if air is permitted to quickly flow between them then the floating operation of the moving member can be effected quickly.

The present invention is not limited to the embodiments described above, but can be changed or modified in various ways without departing from the scope of the invention, and such changes or modifications are not excluded from the scope of the invention as defined in the appended claims.

As described above, an embodiment of the present invention can provide an electrostatic actuator whose construction can be simplified and which has a short charging time.

## Claims

1. An electrostatic actuator including:
a first member (1) having at or close to a working surface thereof a plurality of strip-form electrodes (4) arranged in a predetermined pattern with predetermined gaps therebetween, the electrodes of the said plurality being divided into three sets (4a, 4b, 4c) that can be energised independently of one another;
a second member (10) movable relative to the first member (1) and having a resistance element (12), extending over the said working surface, upon which a predetermined charge pattern can be induced by application to the said sets of electrodes of a predetermined combination of voltages; and
control means (11) for causing a predetermined change in the voltages applied respectively to the three sets of electrodes so that an electrostatic force is produced between the first and second members that brings about relative movement between those members in a direction tangential to the strip-form electrodes;
the said resistance element (12) having a time constant, determined primarily by the volume resistivity and dielectric constant of the material constituting that element, that is at least twice the time taken for such relative movement over a distance (ℓ₂) corresponding to the mutual spacing of the electrodes;
characterised in that the first member (1) includes an electrode support portion (125), made of insulating material, on a first surface of which the electrodes of two of the said sets (126a, 126b) are mounted and on a further surface of which, opposite the said first surface, the electrodes of the other set (126c) are mounted.

2. An actuator as claimed in claim 1, wherein the said predetermined change in the applied voltages also brings about separation of the first and second members (1, 10) at the time of the said relative movement.

3. An actuator as claimed in claim 1 or 2, wherein the said control means (11) cause voltage pulses to be applied to the sets of electrodes, the control means being operable to cause different combinations (+V, -V, 0; -V, +V, -V; 0, +V, -V; -V, -V, +V; -V, 0, +V; +V, -V, -V) of such voltage pulses to be applied to the sets of electrodes in a predetermined sequence.

4. An actuator as claimed in any preceding claim, wherein the volume resistivity of the said resistance element (12) of the said second member (10) is in the range from 10⁹ to 10¹⁹ Ωcm.

5. An actuator as claimed in claim 4, wherein the volume resistivity of the said resistance element (12) of the said second member (10) is in the range from 10¹³ to 10¹⁵ Ωcm.

6. An actuator as claimed in any preceding claim, wherein the said resistance element of the said second member (135) is made of a photoconductive material.

7. An actuator as claimed in claim 6, further including:
light irradiation means (130; 137, 138) arranged for irradiating light onto the said resistance element;
the said control means being operable to cause a first voltage pattern to be applied to the three sets of electrodes (4) at a time when the said light irradiation means are irradiating light on to the said resistance element, and to cause a different voltage pattern to be applied to the three sets of electrodes when such irradiation by the light irradiation means is stopped.

8. An actuator as claimed in claim 7, wherein the said resistance element is a thin film member (135) made of such photoconductive material, and the said light irradiation means comprise a light emission device or a plurality of devices (130a-f) arranged in a common plane.

9. An actuator as claimed in claim 7, wherein the said resistance element is a thin film member (135) made of such photoconductive material, and the said light irradiation means (137, 138) comprise a light redirecting member (138) having a side surface formed with a plurality of light emitting portions at different positions thereon, which portions are shaped such that, when the light redirecting member is irradiated with light from a single light source (137), light beams are emitted respectively by the light emitting portions towards respective predetermined portions of the said resistance element.

10. An actuator as claimed in any preceding claim, wherein a plurality of such first and second members (22 to 25, 32 to 35; 62 to 64, 72A to 75A; 81 to 84, 86 to 89; 81 to 83, 86 to 88; 91, 93, 95, 97, 99, 90, 92, 94, 96, 98) are stacked alternately in such a way that the electrodes of one of the first members face the resistance element of a corresponding one of the said second members.

11. An actuator as claimed in claim 10, wherein each of the said first and second members (22 to 25, 32 to 35; 62 to 64, 72A to 75A; 81 to 84, 86 to 89) is rectangular, and the first members (22 to 25; 62 to 64; 81 to 84) are connected together at respective end portions thereof to form a first integral structure (20; 60; 80), and the second members (32 to 35; 72A to 75A; 86 to 89) are connected together at respective end portions thereof to form a second integral structure (30; 70; 85) .

12. An actuator as claimed in claim 10, wherein each of the said first and second members (81 to 83, 86 to 88) is arcuate or fan-shaped, and the first members (81 to 83) are connected together at respective end portions thereof to form a first integral structure (80) and the second members (86 to 88) are connected together at respective end portions thereof to form a second integral structure (85).

13. An actuator as claimed in claim 10, wherein each of the said first and second members (90 to 99) is disk-like or ring-like.

14. An actuator as claimed in claim 13, wherein at least some of the electrodes (91c, 93c, 95c, 97c, 99c) of each first member (91, 93, 95, 97, 99) are arranged to extend radially with respect to a central location of the first member concerned.

15. An actuator as claimed in claim 14, wherein the said first and second members are all disk-like and are stacked coaxially, and each member has, at the said central location thereof, an aperture through which a rotary shaft (100) of the actuator extends, at least one of the said first members or at least one of the second members (90, 92, 94, 96, 98) being fixed to the said rotary shaft (100).

16. An actuator as claimed in claim 15, wherein each of the said second members (90, 92, 94, 96, 98) has a support member (90a, 92a, 94a, 96a, 98a) for supporting the resistance element (90b, 92b, 94b, 96b, 98b) of the second member concerned.

17. An actuator as claimed in any preceding claim, wherein the said first member (40) also has, at or close to its said working surface, a further plurality of such strip-form electrodes arranged in a further pattern (42/43; 46/47; 49b/49d) in which the electrodes extend in a direction different from the electrodes of the said predetermined pattern (41; 48; 49a/49c).

18. An actuator as claimed in claim 17, wherein the electrodes of the said further pattern (42/43; 46/47; 49b/49d) extend orthogonally to those of the said predetermined pattern (41; 48; 49a/49c).

19. An actuator as claimed in claim 17 or 18, wherein the said control means are operable to energise the electrodes of one of the two patterns independently of the electrodes of the other of those two patterns.

20. An actuator as claimed in claim 17 or 18, wherein the control means are operable to energise the electrodes of both patterns simultaneously, whereby the said relative movement has respective components in the said direction tangential to the strip-form electrodes of the predetermined pattern (41; 48; 49a/49c) and in a direction tangential to the strip-form electrodes of the said further pattern (42/43; 46/47; 49b/49d).

21. An actuator as claimed in claim 18, or in claim 19 or 20 when either of those claims is read as appended to claim 18, wherein the said first member (40) also has, at or close to its said working surface, a third plurality of such strip-form electrodes arranged in a ring-like pattern (49z) in which each electrode extends radially with respect to a central point on the first member.

22. An electrostatic actuator including:
a flat sheet-like first member having at or close to a working surface thereof a plurality of strip-form electrodes (93) insulated from one another;
a second member, in the form of a thin film member, movable relative to the first member and having a resistance element (90), extending over the said working surface, upon which a predetermined charge pattern can be induced by application to the said electrodes (93) of a predetermined combination of voltages; and
control means for causing a predetermined change in the voltages applied to the electrodes (93) so that an electrostatic force is produced between the first and second members that brings about relative movement between those members;
the time constant of the said resistance element (90), which is determined primarily by the volume resistivity and dielectric constant of the material constituting that element, being at least twice the time necessary for such relative movement over a distance corresponding to the mutual spacing of the electrodes (93);
characterised by a support member (92) which supports the said resistance element (90) at opposite ends thereof and which has a recess (91) permitting deflection of an intermediate portion of that element, between the said opposite ends.

23. An actuator as claimed in claim 22, wherein the control means are operable to control the voltages applied to the electrodes (93) in such a way as to place the second member under tension.

24. An electrostatic actuator including:
a flat sheet-like first member (52) having at or close to a working surface thereof a plurality of strip-form electrodes (53, 54) insulated one from the next and extending in a predetermined direction with predetermined gaps between them;
a second member (55), in the form of a thin film member, movable relative to the first member (52) and having a resistance element, extending over the said working surface, upon which a predetermined charge pattern can be induced by application to the said electrodes (53, 54) of a predetermined combination of voltages; and
control means for causing a predetermined change in the voltages applied to the electrodes (53, 54) so that an electrostatic force is produced between the first and second members that brings about relative movement between those members;
the time constant of the said resistance element, which is determined primarily by the volume resistivity and dielectric constant of the material constituting that element, being at least twice the time necessary for such relative movement over a distance corresponding to the mutual spacing of the electrodes;
characterised in that the electrodes of the said plurality are divided into two sets (53, 54) arranged such that a first portion of the second member (55) extends over electrodes of one of these sets (53) whilst a second portion of the second member extends over electrodes of the other set (54), the control means being operable to-control the voltages applied to the two sets (53, 54) of electrodes in such a way as to tend to cause the first and second portions to move simultaneously in opposite respective directions (A, B), thereby to place the second member (55) under tension.

25. An electrostatic actuator including:
a first member (56; 200) having at or close to a working surface (56a/56b) thereof a plurality of strip-form electrodes (57; 104) insulated one from the next;
a second member (58; 102) movable relative to the first member and having a resistance element, extending over the said working surface, upon which a predetermined charge pattern can be induced by application to the said electrodes of a predetermined combination of voltages; and
control means for causing a predetermined change in the voltages applied to the electrodes so that an electrostatic force is produced between the first and second members that brings about relative movement between those members (56, 58; 200, 102);
the said resistance element having a time constant, determined primarily by the volume resistivity and dielectric constant of the material constituting that element, that is at least twice the time taken for such relative movement over a distance corresponding to the mutual spacing of the electrodes (57, 104);
characterised in that the said first member (56, 200) has a cylindrical main body portion, a cylindrical surface (56a/56b) of which provides the said working surface, the strip-form electrodes (57, 104) each being arranged to extend in the axial direction of the said cylindrical main body portion and being spaced apart circumferentially over the said cylindrical surface (56a/56b) of that portion; and
in that the said second member also has a cylindrical surface that extends over the said working surface (56a/56b) of the first member.

26. An electrostatic actuator including:
a first member (200) having at or close to a working surface thereof a plurality of strip-form electrodes (101) insulated one from the next;
a second member (102) movable relative to the said first member and having a resistance element, extending over the said working surface, upon which a predetermined charge pattern can be induced by application to the said sets of electrodes of a predetermined combination of voltages; and
control means for causing a predetermined change in the voltages applied to the electrodes (101) so that an electrostatic force is produced between the first and second members that brings about relative movement between those members (200, 102);
the said resistance element having a time constant, determined primarily by the volume resistivity and dielectric constant of the material constituting that element, that is at least twice the time taken for such relative movement over a distance corresponding to the mutual spacing of the electrodes (101);
characterised in that the said first member (200) has a cylindrical main body portion, a cylindrical surface of which provides the said working surface, the electrodes (101) each extending circumferentially around the cylindrical surface of the said main body portion and being spaced apart one from the next in the axial direction of the said cylindrical main body portion; and
in that the said second member has a cylindrical surface that extends over the said working surface of the first member (200) .

27. An actuator as claimed in claim 26, wherein the said first member (200) also has at or close to the said working surface a further plurality of strip-form electrodes (104) extending respectively in the said axial direction of the said cylindrical main body portion and being spaced apart circumferentially over the said cylindrical surface of the said main body portion, which electrodes (104) are insulated from one another;
the said control means also being operable selectively to cause a predetermined change in the voltages applied to the electrodes (104) of the said further plurality so as to bring about relative movement between the said first and second members (200, 102) in the circumferential direction.

28. An electrostatic actuator including a first member (105) having at or close to a working surface thereof a plurality of strip-form electrodes (106a, 106b) insulated from one another and extending in a predetermined direction with predetermined gaps between them;
a second member (107) movable over the said working surface and having a resistance element, extending over the said working surface, upon which a predetermined charge pattern can be induced by application to the said electrodes of a predetermined combination of voltages; and
control means for causing a predetermined change in the voltages applied to the said electrodes (106a, 106b) so that an electrostatic force is produced between the first and second members that brings about movement of the second member across the said working surface in a direction perpendicular to the said predetermined direction;
the time constant of the said resistance element (90), which is determined primarily by the volume resistivity and dielectric constant of the material constituting that element, being at least twice the time necessary for such relative movement over a distance corresponding to the mutual spacing of the electrodes (93);
characterised in that the said second member is a flexible thin film member; and
further characterised in that the control means are operable to control the voltages applied to the electrodes in such a way as to cause respective leading and trailing portions (107a, 107b) of the second member (107) to be moved alternately in the said direction perpendicular to the predetermined direction.

29. An electrostatic actuator including:
a first member (112; 112a/112b) having at or close to a working surface thereof a plurality of strip-form electrodes (111) insulated from one another and extending in a predetermined direction with predetermined gaps between them;
a second member (110) movable over the said working surface and having a resistance element, extending over the said working surface, upon which a predetermined charge pattern can be induced by application to the said electrodes of a predetermined combination of voltages; and
control means for causing a predetermined change in the voltages applied to the said electrodes (111) so that an electrostatic force is produced between the first and second members that brings about movement of the second member across the said working surface in a direction perpendicular to the said predetermined direction;
the time constant of the said resistance element, which is determined primarily by the volume resistivity and dielectric constant of the material constituting that element, being at least twice the time necessary for such movement of the second member over a distance corresponding to the mutual spacing of the electrodes (111) ;
characterised in that the said second member is in the form of a flexible endless belt (110) that is supported rotatably by a support member (109a) so that one side of the belt is opposed to the said working surface, whereby the said movement of the second member across the said working surface of the first member brings about rotation of the said second member around the support member.

30. An electrostatic actuator including:
a pair of cylindrical support members (113, 114; 115, 116), arranged side by side, each having at or close to an outer peripheral surface thereof a plurality of strip-form electrodes (113a, 114a; 115a, 116a) insulated from one another and extending in the axial direction of the cylindrical support member and spaced apart circumferentially over the said outer peripheral surface with predetermined gaps between them;
a movable member (110), consisting of an endless-belt-like flexible resistance element, looped around both of the said cylindrical support members (113, 114; 115, 116) so that an inner surface of the element is opposed to the said outer peripheral surface of each cylindrical support member; and
control means for causing a predetermined change in the voltages applied to the electrodes (113a, 114a; 115a, 116a) so as to bring about rotation of the said movable member (110) around the said support members;
the time constant of the said resistance element, which is determined primarily by the volume resistivity and dielectric constant of the material constituting that element, being at least twice the time necessary for the movable member (110) to move by a distance corresponding to the mutual spacing of the electrodes (113a, 114a,; 115a, 116a).

31. An actuator as claimed in claim 30, wherein at least one of the said cylindrical support members (115) has rotary driving means operable to bring about rotation of the support member concerned.

32. An electrostatic actuator comprising:
a first member (117; 120) having at or close to a working surface thereof a plurality of strip-form electrodes (118a-d; 120a/c) insulated from one another;
a second member (119; 121) movable relative to the first member and having a resistance element, extending over the said working surface, upon which a predetermined charge pattern can be induced by application to the said electrodes of a predetermined combination of voltages; and
control means for causing a predetermined change in the voltages applied to the electrodes so that an electrostatic force is produced between the first and second members that brings about relative movement between those members (117, 119; 120, 121);
the said resistance element having a time constant, determined primarily by the volume resistivity and dielectric constant of the material constituting that element, that is at least twice the time taken for such relative movement over a distance corresponding to the mutual spacing of the electrodes (118a-d; 120a/c) ;
characterised in that the said first member (117, 120) has a main body portion having a spherical surface portion which provides the said working surface; and
in that the said second member also has a spherical surface portion which extends over, and conforms in shape to, the said working surface.

33. An actuator as claimed in claim 32, wherein one of the said first and second members (119; 120) is conical and the other of those two members (117; 121) is spherical.

34. An actuator as claimed in claim 32 or 33, wherein some or all of the strip-form electrodes (118a,c; 120a,c) are arrayed along different respective lines of latitude of the said spherical surface portion of the said first member (117, 120).

35. An actuator as claimed in any one of claims 32 to 34, wherein some or all of the said strip-form electrodes (118b,d) are arrayed along different respective lines of longitude of the said spherical surface portion of the said first member (117).

36. An actuator as claimed in any preceding claim, wherein one surface of the resistance element is directly opposed to, and can come into contact with, the said working surface of the first member.

37. Apparatus for use in determining a predetermined physical property of a laminate electrically-resisting body, which apparatus comprises:
a support member having a working surface for supporting such a body and also having at or close to the said working surface a plurality of strip-form electrodes insulated from one another; and
control means operable, when such a body is supported on the said working surface so as to face the said electrodes, to cause a predetermined change in the voltages applied to the electrodes so that an electrostatic force is produced between the body and the support member that brings about relative movement between the body and the support member, which relative movement can be analysed to provide data for use in determining the said predetermined physical property of the body.

38. Apparatus for classifying by size a plurality of laminate electrically-resisting bodies, comprising:
a first member (160) having a working surface for supporting such a plurality of bodies to be classified and also having at or close to the said working surface a plurality of strip-form electrodes (161, 162, 163) extending in parallel to, and are insulated from, one another and arrayed across the said working surface from one side thereof to the opposite side thereof such that their mutual spacing increases progressively in the direction from the said one side to the said opposite side; and
control means operable, when such bodies are placed on the said one side of the said working surface so as to face the electrodes, to cause a sequence of predetermined changes in the voltages applied to the electrodes so that electrostatic forces are produced between the bodies on the one hand and the first member on the other hand, bringing about sequential movement of the bodies over the working surface in the said direction towards the said other side thereof, the size of each body in relation to the mutual spacing of the electrodes determining the distance which the body concerned moves in the said direction over the course of the said sequence so that upon completion of that sequence the relative positions of the bodies on the said working surface provide an indication of their relative sizes.

## Patentansprüche

1. Elektrostatische Betätigungsvorrichtung mit:
einem ersten Teil (1), welches bei oder dicht bei einer Arbeitsfläche desselben eine Vielzahl von Streifenform-Elektroden (4) aufweist, die in einem vorbestimmten Muster mit vorbestimmten Spalten dazwischen angeordnet sind, wobei die Elektroden der Vielzahl der Elektroden in drei Sätze (4a, 4b, 4c) aufgeteilt sind, die unabhängig voneinander erregt werden können;
einem zweiten Teil (10), welches relativ zu dem ersten Teil (1) bewegbar ist und ein Widerstandselement (12) aufweist, das sich über die Arbeitsfläche erstreckt, auf der ein vorbestimmtes Ladungsmuster dadurch induziert werden kann, indem an die Sätze der Elektroden eine vorbestimmte Kombination von Spannungen angelegt werden; und
einer Steuereinrichtung (11), um eine vorbestimmte Änderung in den Spannungen zu bewirken, die jeweils an die drei Sätze der Elektroden angelegt werden, so daß eine elektrostatische Kraft zwischen dem ersten und dem zweiten Teil erzeugt wird, die eine relative Bewegung zwischen diesen Teilen in einer Richtung tangential zu den Streifenform-Elektroden hervorbringt;
wobei das Widerstandselement (12) eine Zeitkonstante besitzt, die hauptsächlich durch den Volumenwiderstand und die Dielektrizitätskonstante des Materials bestimmt ist, welches dieses Element bildet und wobei diese Zeitkonstante wenigstens das zweifache der Zeit beträgt, die für eine relative Bewegung über eine Strecke (ℓ₂) benötigt wird, welche dem gegenseitigen Abstand der Elektroden entspricht;
dadurch **gekennzeichnet**, daß das erste Teil (1) einen Elektrodenhalterungsabschnitt (125) aufweist, der aus einem isolierenden Material hergestellt ist, wobei an einer ersten Oberfläche desselben die Elektroden von zwei der Sätze (126a, 126b) befestigt sind und an einer weiteren Oberfläche desselben, die der ersten Oberfläche gegenüberliegt, die Elektroden des anderen Satzes (126c) befestigt sind.

2. Betätigungsvorrichtung nach Anspruch 1, bei der die vorbestimmte Änderung in den angelegten Spannungen auch eine Trennung des ersten und des zweiten Teiles (1, 10) zu dem Zeitpunkt der relativen Bewegung hervorbringt.

3. Betätigungsvorrichtung nach Anspruch 1 oder 2, bei der die Steuereinrichtung (11) bewirkt, daß Spannungsimpulse an die Sätze der Elektroden angelegt werden, wobei die Steuereinrichtung so betreibbar ist, um unterschiedliche Kombinationen (+V, -V, 0; -V, +V, -V; 0, +V, -V; -V, -V, +V; -V, 0, +V; +V, -V, -V) derartiger Spannungsimpulse an die Sätze der Elektroden in einer vorbestimmten Folge anzulegen.

4. Betätigungsvorrichtung nach irgendeinem der vorhergehenden Ansprüche, bei der der Volumenwiderstand des Widerstandselements (12) des zweiten Teiles (10) in dem Bereich von 10⁹ bis 10¹⁹ Ωcm liegt.

5. Betätigungsvorrichtung nach Anspruch 4, bei der der Volumenwiderstand des Widerstandselements (12) des zweiten Teiles (10) in dem Bereich von 10¹³ bis 10¹⁵ Ωcm liegt.

6. Betätigungsvorrichtung nach irgendeinem der vorhergehenden Ansprüche, bei der das Widerstandselement des zweiten Teiles (135) aus einem photoleitfähigen Material hergestellt ist.

7. Betätigungsvorrichtung nach Anspruch 6, die ferner enthält:
eine Lichtbestrahlungseinrichtung (130; 137, 138), die dafür ausgebildet ist, um Licht auf das Widerstandselement zu strahlen,
wobei die Steuereinrichtung so betreibbar ist, um ein erstes Spannungsmuster, welches an die drei Sätze der Elektroden (4) anzulegen ist, zu einem Zeitpunkt anzulegen, wenn die Lichtbestrahlungseinrichtung Licht auf das Widerstandselement strahlt und um ein unterschiedliches Spannungsmuster an die drei Sätze der Elektroden anzulegen, wenn diese Bestrahlung durch die Lichtbestrahlungseinrichtung angehalten wird.

8. Betätigungsvorrichtung nach Anspruch 7, bei der das Widerstandselement aus einem Dünnfilmteil (135) besteht, welches aus einem photoleitfähigen Material hergestellt ist und bei dem die Lichtbestrahlungseinrichtung eine Lichtemissionsvorrichtung oder eine Vielzahl von Vorrichtungen (130a-f) aufweist, die in einer gemeinsamen Ebene angeordnet ist bzw sind.

9. Betätigungsvorrichtung nach Anspruch 7, bei der das Widerstandselement aus einem Dünnfilmteil (135) besteht, welches aus einem photoleitfähigen Material hergestellt ist, und bei dem die Lichtbestrahlungseinrichtung (137, 138) ein Licht rücklenkendes Teil (138) aufweist, das eine Seitenfläche besitzt, die mit einer Vielzahl von lichtemittierenden Abschnitten an unterschiedlichen Positionen desselben ausgestattet ist, wobei diese Abschnitte derart gestaltet sind, daß dann, wenn das das Licht rücklenkende Teil mit Licht von der einzelnen Lichtquelle (137) bestrahlt wird, Lichtstrahlen jeweils durch die lichtemittierenden Abschnitte zu den jeweiligen vorbestimmten Abschnitten des Widerstandselements emittiert werden.

10. Betätigungsvorrichtung nach irgendeinem der vorhergehenden Ansprüche, bei der eine Vielzahl von derartigen ersten und zweiten Teilen (22 bis 25, 32 bis 35; 62 bis 64, 72A bis 75A; 81 bis 84, 86 bis 89; 81 bis 83, 86 bis 88; 91, 93, 95, 97, 99, 90, 92, 94, 96, 98) abwechselnd in einer solchen Weise gestapelt sind, daß die Elektroden von einem der ersten Teile zu dem Widerstandselement eines entsprechenden einen der zweiten Teile hinweisen.

11. Betätigungsvorrichtung nach Anspruch 10, bei der jedes der ersten und zweiten Teile (22 bis 25, 32 bis 35; 62 bis 64, 72A bis 75A; 81 bis 84, 86 bis 89) rechteckförmig gestaltet ist und bei dem die ersten Teile (22 bis 25; 62 bis 64; 81 bis 84) an jeweiligen Endabschnitten derselben miteinander verbunden sind, um eine erste integrale Struktur (20; 60; 80) zu bilden und bei dem die zweiten Teile (32 bis 35; 72A bis 75A; 86 bis 89) an jeweiligen Endabschnitten derselben miteinander verbunden sind, um eine zweite integrale Struktur (30; 70; 85) zu bilden.

12. Betätigungsvorrichtung nach Anspruch 10, bei der jedes der ersten und zweiten Teile (81 bis 83, 86 bis 88) bogenförmig oder fächerförmig gestaltet ist und bei dem die ersten Teile (81 bis 83) an jeweiligen Endabschnitten derselben miteinander verbunden sind, um eine erste integrale Struktur (80) zu bilden und bei der die zweiten Teile (86 bis 88) an jeweiligen Endabschnitten derselben miteinander verbunden sind, um eine zweite integrale Struktur (85) zu bilden.

13. Betätigungsvorrichtung nach Anspruch 10, bei der jedes der ersten und zweiten Teile (90 bis 99) scheibenförmig oder ringförmig ausgebildet ist.

14. Betätigungsvorrichtung nach Anspruch 13, bei der wenigstens einige der Elektroden (91c, 93c, 95c, 97c, 99c) von jedem ersten Teil (91, 93, 95, 97, 99) so angeordnet sind, daß sie sich in bezug auf eine zentrale Stelle des in Betracht stehenden ersten Teiles in radialer Richtung erstrecken.

15. Betätigungsvorrichtung nach Anspruch 14, bei der die ersten und zweiten Teile alle plattenförmig ausgeführt sind und koaxial gestapelt sind und bei der jedes Teil an der genannten zentralen Stelle desselben eine Öffnung aufweist, durch die eine Drehwelle (100) der Betätigungsvorrichtung hindurchragt, wobei wenigstens eines der ersten Teile oder wenigstens eines der zweiten Teile (90, 92, 94, 96, 98) an der Drehwelle (100) befestigt ist.

16. Betätigungsvorrichtung nach Anspruch 15, bei der jedes der zweiten Teile (90, 92, 94, 96, 98) ein Halterungsteil (90a, 92a, 94a, 96a, 98a) aufweist, um das Widerstandselement (90b, 92b, 94b, 96b, 98b) des in Betracht stehenden zweiten Teiles zu haltern.

17. Betätigungsvorrichtung nach irgendeinem der vorhergehenden Ansprüche, bei dem das erste Teil (40) bei oder dicht bei dessen Arbeitsfläche eine weitere Vielzahl von Streifenform-Elektroden aufweist, die in einem weiteren Muster (42/43; 46/47; 49b/49d) angeordnet sind, in welchem sich die Elektroden in einer Richtung erstrecken, verschieden von den Elektroden des vorbestimmten Musters (41; 48; 49a/49c).

18. Betätigungsvorrichtung nach Anspruch 17, bei der sich die Elektroden des weiteren Musters (42/43; 46/47; 49b/49d) orthogonal zu denjenigen des vorbestimmten Musters (41; 48; 49a/49c) erstrecken.

19. Betätigungsvorrichtung nach Anspruch 17 oder 18, bei der die Steuereinrichtung so betreibbar ist, um die Elektroden von einem der zwei Muster unabhängig von den Elektroden der anderen dieser zwei Muster zu erregen.

20. Betätigungsvorrichtung nach Anspruch 17 oder 18, bei der die Steuereinrichtung so betreibbar ist, um die Elektroden von beiden Mustern gleichzeitig zu erregen, wodurch die relative Bewegung jeweilige Komponenten in der genannten Richtung tangential zu den Streifenform-Elektroden des vorbestimmten Musters (41; 48; 49a/49c) und in einer Richtung tangential zu den Streifenform-Elektroden des weiteren Musters (42/43; 46/47; 49b/49d) besitzt.

21. Betätigungsvorrichtung nach Anspruch 18 oder Anspruch 19 oder 20, wenn einer dieser Ansprüche in Rückbeziehung auf Anspruch 18 gelesen wird, bei der das erste Teil (40) bei oder dicht bei seiner Arbeitsfläche eine dritte Vielzahl von solchen Streifenform-Elektroden aufweist, die in einem ringförmigen Muster (49z) angeordnet sind, in welchem jede Elektrode sich radial in bezug auf einen zentralen Punkt an dem ersten Teil erstreckt.

22. Elektrostatische Betätigungsvorrichtung mit:
einem flachen blattförmigen ersten Teil, welches bei oder dicht bei einer Arbeitsfläche desselben eine Vielzahl von Streifenform-Elektroden (93) besitzt, die voneinander isoliert sind,
einem zweiten Teil in der Form eines Dünnfilmteiles, welches relativ zu dem ersten Teil bewegbar ist und ein Widerstandselement (90) aufweist, welches sich über die Arbeitsfläche erstreckt, auf dem ein vorbestimmtes Ladungsmuster dadurch induziert werden kann, indem die Elektroden (93) mit einer vorbestimmten Kombination von Spannungen beaufschlagt werden, und
einer Steuereinrichtung, um eine vorbestimmte Änderung in den an die Elektroden (93) angelegten Spannungen zu bewirken, so daß eine elektrostatische Kraft zwischen dem ersten und dem zweiten Teil erzeugt wird, die eine relative Bewegung zwischen solchen Teilen hervorbringt,
wobei die Zeitkonstante des Widerstandselements (90), die hauptsächlich durch den Volumenwiderstand und die Dielektrizitätskonstante des das Element bildenden Materials bestimmt ist, wenigstens das zweifache der Zeit beträgt, die erforderlich ist, um eine solche relative Bewegung über eine Strecke auszuführen, die dem gegenseitigen Abstand der Elektroden (93) entspricht,
**gekennzeichnet** durch ein Halterungsteil (92), welches das Widerstandselement (90) an gegenüberliegenden Enden desselben abstützt oder haltert und welches eine Ausnehmung (91) aufweist, die eine Ablenkung oder Abbiegen eines Zwischenabschnitts dieses Elements zwischen den sich gegenüberliegenden Enden erlaubt.

23. Betätigungsvorrichtung nach Anspruch 22, bei der die Steuereinrichtung so betreibbar ist, um die an die Elektroden (93) angelegten Spannungen in solcher Weise zu steuern, daß das zweite Teil unter Spannung gesetzt wird.

24. Elekrostatische Betätigungsvorrichtung, mit:
einem flachen blattförmigen ersten Teil (52), welches bei oder dicht bei einer Arbeitsfläche desselben eine Vielzahl von streifenförmigen Elektroden (53, 54) aufweist, bei denen eine gegenüber der nächsten isoliert ist und die sich in einer vorbestimmten Richtung mit vorbestimmten Spalten zwischen diesen erstrecken,
einem zweiten Teil (55) in Form eines Dünnfilmteiles, welches relativ zu dem ersten Teil (52) bewegbar ist und ein Widerstandselement besitzt, welches sich über die genannte Arbeitsfläche erstreckt und auf dem ein vorbestimmtes Ladungsmuster dadurch induziert werden kann, indem an die Elektroden (53, 54) eine vorbestimmte Kombination von Spannungen angelegt wird, und
einer Steuereinrichtung, um eine vorbestimmte Änderung in den Spannungen zu bewirken, die an die Elektroden (53, 54) angelegt werden, so daß zwischen dem ersten und dem zweiten Teil eine elektrostatische Kraft erzeugt wird, die eine relative Bewegung zwischen diesen Teilen hervorbringt,
wobei die Zeitkonstante des Widerstandselements, die hauptsächlich durch den Volumenwiderstand und die Dielektrizitätskonstante des das Element bildenden Materials bestimmt ist, wenigstens das zweifache der Zeit beträgt, die bei einer solchen relativen Bewegung über eine Strecke erforderlich ist, welche dem gegenseitigen Abstand der Elektroden entspricht,
dadurch **gekennzeichnet,** daß die Vielzahl der Elektroden in zwei Sätze (53, 54) aufgeteilt ist, die so angeordnet sind, daß ein erster Abschnitt des zweiten Teiles (55) sich über die Elektroden von einem dieser Sätze (53) erstreckt, während sich ein zweiter Abschnitt des zweiten Teiles über die Elektroden des anderen Satzes (54) erstreckt, wobei die Steuereinrichtung so betreibbar ist, um die an die zwei Sätze (53, 54) von Elektroden angelegten Spannungen derart zu steuern, daß der erste und der zweite Abschnitt sich gleichzeitig in einander entgegengesetzten Richtungen (A, B) bewegen, um dadurch das zweite Teil (55) unter Spannung zu setzen.

25. Elektrostatische Betätigungsvorrichtung, mit:
einem ersten Teil (56; 200), welches bei oder dicht bei einer Arbeitsfläche (56a/56b) desselben eine Vielzahl von streifenförmiger Elektroden (57; 104) aufweist, von denen eine gegenüber der nächsten isoliert ist,
einem zweiten Teil (58; 102), welches relativ zu dem ersten Teil bewegbar ist und ein Widerstandselement aufweist, welches sich über die Arbeitsfläche hinweg erstreckt, auf dem ein vorbestimmtes Ladungsmuster dadurch induziert werden kann, indem an die Elektroden eine vorbestimmte Kombination von Spannungen angelegt wird, und
einer Steuereinrichtung, um eine vorbestimmte Änderung in den Spannungen zu bewirken, die an die Elektroden angelegt werden, so daß eine elektrostatische Kraft zwischen dem ersten und dem zweiten Teil erzeugt wird, die eine relative Bewegung zwischen diesen Teilen (56, 58; 200, 102) hervorbringt,
wobei das Widerstandselement eine Zeitkonstante aufweist, die hauptsächlich durch den Volumenwiderstand und die Dielektrizitätskonstante des das Element bildenden Materials bestimmt ist und die wenigstens das zweifache der Zeit beträgt, die für eine solche relative Bewegung über eine Strecke benötigt wird, welche dem gegenseitigen Abstand der Elektroden (57, 104) entspricht,
dadurch **gekennzeichnet,** daß das erste Teil (56, 200) einen zylinderförmigen Hauptkörperabschnitt aufweist, von dem eine zylinderförmige Fläche (56a/56b) die genannte Arbeitsfläche bildet, wobei die streifenförmigen Elektroden (57, 104) so angeordnet sind, daß sie sich in axialer Richtung des zylinderförmigen Hauptkörperabschnitts erstrecken und umfangsmäßig über die zylinderförmige Fläche (56a/56b) dieses Abschnitts beabstandet angeordnet sind, und
daß das zweite Teil ebenfalls eine zylinderförmige Fläche aufweist, die sich über die Arbeitsfläche (56a/56b) des ersten Teiles erstreckt.

26. Elektrostatische Betätigungsvorrichtung, mit:
einem ersten Teil (200), welches bei oder dicht bei einer Arbeitsfläche desselben eine Vielzahl von streifenförmigen Elektroden (101) aufweist, bei denen eine gegenüber der nächsten isoliert ist,
einem zweiten Teil (102), welches relativ zu dem ersten Teil bewegbar ist und ein Widerstandselement aufweist, welches sich über die Arbeitsfläche hinweg erstreckt, auf dem ein vorbestimmtes Ladungsmuster dadurch induziert werden kann, indem an die Sätze der Elektroden eine vorbestimmte Kombination von Spannungen angelegt wird, und
einer Steuereinrichtung, um eine vorbestimmte Anderung in den Spannungen zu bewirken, die an die Elektroden (101) angelegt werden, so daß zwischen dem ersten und dem zweiten Teil eine elektrostatische Kraft erzeugt wird, die eine relative Bewegung zwischen diesen Teilen (200, 102) hervorbringt,
wobei das Widerstandselement eine Zeitkonstante aufweist, die hauptsächlich durch den Volumenwiderstand und die Dielektrizitätskonstante des das Element bildenden Materials bestimmt ist und die wenigstens das zweifache der Zeit beträgt, die für eine solche relative Bewegung über eine Strecke erforderlich ist, welche dem gegenseitigen Abstand der Elektroden (101) entspricht,
dadurch **gekennzeichnet**, daß das erste Teil (200) einen zylinderförmigen Hauptkörperabschnitt aufweist, von dem eine zylinderförmige Fläche eine Arbeitsfläche bildet, wobei sich die Elektroden (101) je in Umfangsrichtung um die zylinderförmige Fläche des Hauptkörperabschnitts herum erstrecken und wobei eine gegenüber der nächsten in axialer Richtung des zylinderförmigen Hauptkörperabschnitts beabstandet ist, und
daß das zweite Teil eine zylinderförmige Fläche aufweist, die sich über der Arbeitsfläche des ersten Teiles (200) erstreckt.

27. Betätigungsvorrichtung nach Anspruch 26, bei der das erste Teil (200) auch bei oder dicht bei der Arbeitsfläche eine weitere Vielzahl von streifenförmigen Elektroden (104) aufweist, die sich jeweils in der Axialrichtung des zylinderförmigen Hauptkörperabschnitts erstrecken und die umfangsmäßig über die zylinderförmige Fläche des Hauptkörperabschnitts beabstandet sind und welche Elektroden (104) voneinander isoliert sind,
wobei die Steuereinrichtung auch selektiv so betreibbar ist, um eine vorbestimmte Änderung in den an die Elektroden (104) der weiteren Vielzahl von Elektroden angelegten Spannungen zu bewirken, um eine relative Bewegung zwischen dem ersten und dem zweiten Teil (200, 102) in Umfangsrichtung hervorzubringen.

28. Elektrostatische Betätigungsvorrichtung mit einem ersten Teil (105), welches bei oder dicht bei einer Arbeitsfläche desselben eine Vielzahl von Streifenform-Elektroden (106a, 106b) aufweist, die voneinander isoliert sind und sich in einer vorbestimmten Richtung mit vorbestimmten Spalten zwischen denselben erstrecken,
einem zweiten Teil (107), welches über die Arbeitsfläche hinweg bewegbar ist und ein Widerstandselement aufweist, welches sich über die Arbeitsfläche erstreckt, auf dem ein vorbestimmtes Ladungsmuster induziert werden kann, indem an die Elektroden eine vorbestimmte Kombination von Spannungen angelegt wird,
und einer Steuereinrichtung, um eine vorbestimmte Änderung in den an die Elektroden (106a, 106b) angelegten Spannungen zu bewirken, so daß eine elektrostatische Kraft zwischen dem ersten und dem zweiten Teil erzeugt wird, die eine Bewegung des zweiten Teiles über die Arbeitsfläche in einer Richtung senkrecht zu der vorbestimmten Richtung hervorbringt,
wobei die Zeitkonstante des Widerstandselements (90), die hauptsächlich durch den Volumenwiderstand und die Dielektrizitätskonstante des das Element bildenden Materials bestimmt ist, wenigstens das zweifache der Zeit beträgt, die für eine solche relative Bewegung über eine Strecke erforderlich ist, welche dem gegenseitigen Abstand der Elektroden (93) entspricht,
dadurch **gekennzeichnet,** daß das zweite Teil ein flexibles Dünnfilmteil ist, und
ferner dadurch gekennzeichnet, daß die Steuereinrichtung so betreibbar ist, um die an die Elektroden angelegten Spannungen in solcher Weise zu steuern, daß jeweilige vordere und hintere Abschnitte (107a, 107b) des zweiten Teiles (107) abwechselnd in der Richtung senkrecht zu der vorbestimmten Richtung bewegt werden.

29. Elektrostatische Betätigungsvorrichtung, mit:
einem ersten Teil (112; 112a/112b), welches bei oder dicht bei einer Arbeitsfläche desselben eine Vielzahl von Streifenform-Elektroden (111) aufweist, die gegeneinander isoliert sind und sich in einer vorbestimmten Richtung mit vorbestimmten Spalten zwischen denselben erstrecken,
einem zweiten Teil (110), welches über die Arbeitsfläche bewegbar ist und ein Widerstandselement aufweist, welches sich über die Arbeitsfläche erstreckt, auf dem ein vorbestimmtes Ladungsmuster dadurch induziert werden kann, indem an die Elektroden ein vorbestimmte Kombination von Spannungen angelegt wird,
und einer Steuereinrichtung, um eine vorbestimmte Änderung in den an die Elektroden (111) angelegten Spannungen zu bewirken, so daß eine elektrostatische Kraft zwischen dem ersten und dem zweiten Teil erzeugt wird, die eine Bewegung des zweiten Teiles über der Arbeitsfläche in einer Richtung senkrecht zu der vorbestimmten Richtung hervorbringt,
wobei die Zeitkonstante des Widerstandselements, die hauptsächlich durch den Volumenwiderstand und die Dielektrizitätskonstante des das Element bildenden Materials bestimmt ist, wenigstens das zweifache der Zeit beträgt, die für eine solche relative Bewegung des zweiten Teiles über eine Strecke erforderlich ist, welche dem gegenseitigen Abstand der Elektroden (111) entspricht,
dadurch **gekennzeichnet**, daß das zweite Teil die Form eines flexiblen Endlosriemens (110) hat, der drehbar durch ein Halterungsteil (109a) so gehaltert ist, daß eine Seite des Riemens der Arbeitsfläche gegenüberliegt, wodurch die Bewegung des zweiten Teiles über der Arbeitsfläche des ersten Teiles eine Drehung des zweiten Teiles um das Halterungsteil herum hervorbringt.

30. Elektrostatische Betätigungsvorrichtung, mit
einem Paar von zylinderförmigen Halterungsteilen (113, 114; 115, 116), die Seite an Seite angeordnet sind und von denen jedes bei oder dicht bei einer Außenumfangsfläche desselben eine Vielzahl von Streifenform-Elektroden (113a, 114a; 115a, 116a) aufweist, die voneinander isoliert sind und sich in der axialen Richtung des zylinderförmigen Halterungsteiles erstrecken und die umfangsmäßig über die Außenumfangsfläche mit Einhaltung vorbestimmter Spalte zwischen denselben beabstandet angeordnet sind,
einem bewegbaren Teil (110), welches aus einem endlosriemen-ähnlichem flexiblen Widerstandselement besteht, welches um beide zylinderförmige Halterungsteile (113, 114; 115, 116) schleifenförmig so herumgeführt ist, daß eine innere Fläche des Elements der Außenumfangsfläche jedes zylinderförmigen Halterungsteiles gegenüberliegt, und
einer Steuereinrichtung, um eine vorbestimmte Änderung in den an die Elektroden (113a, 114a; 115a, 116a) angelegten Spannungen zu bewirken, so daß eine Drehung des bewegbaren Teiles (110) um die Halterungsteile herum hervorgebracht wird,
wobei die Zeitkonstante des Widerstandselements, die hauptsächlich durch den Volumenwiderstand und die Dielektrizitätskonstante des das Element bildenden Materials bestimmt ist, wenigstens das zweifache der Zeit beträgt, die für das bewegbare Teil (110) erforderlich ist, um sich über eine Strecke zu bewegen, die dem gegenseitigen Abstand der Elektroden (113a, 114a; 115a, 116a) entspricht.

31. Betätigungsvorrichtung nach Anspruch 30, bei der wenigstens eines der zylinderförmigen Halterungsteile (115) eine Dreh-Antriebseinrichtung aufweist, die so betreibbar ist, um eine Drehung des in Betracht stehenden Halterungsteiles hervorzubringen.

32. Elektrostatische Betätigungsvorrichtung, die folgendes aufweist:
ein erstes Teil (117; 120), welches bei oder dicht bei einer Arbeitsfläche desselben eine Vielzahl von Streifenform-Elektroden (118a-d; 120a/c) aufweist, die voneinander isoliert sind,
ein zweites Teil (110, 121), welches relativ zu dem ersten Teil bewegbar ist und ein Widerstandselement aufweist, welches sich über die Arbeitsfläche erstreckt und auf dem ein vorbestimmtes Ladungsmuster dadurch induziert werden kann, indem an die Elektroden ein vorbestimmte Kombination von Spannungen angelegt wird, und
eine Steuereinrichtung, um eine vorbestimmte Änderung in den an die Elektroden angelegten Spannungen zu bewirken, so daß eine elektrostatische Kraft zwischen dem ersten und dem zweiten Teil erzeugt wird, die eine relative Bewegung zwischen diesen Teilen (117, 119; 120, 121) hervorbringt,
wobei das Widerstandselement eine Zeitkonstante aufweist, die hauptsächlich durch den Volumenwiderstand und die Dielektrizitätskonstante des das Element bildenden Materials bestimmt ist, die wenigstens das zweifache der Zeit beträgt, die für eine solche relative Bewegung über eine Strecke hinweg benötigt wird, welche dem gegenseitigen Abstand der Elektroden (118a-d; 120a/c) entspricht,
dadurch **gekennzeichnet,** daß das erste Teil (117, 120) einen Hauptkörperabschnitt mit einem kugelförmigen Flächenabschnitt aufweist, welcher die Arbeitsfläche bildet, und
daß das zweite Teil ebenfalls einen kugelförmigen Flächenabschnitt aufweist, der sich über die Arbeitsfläche erstreckt und in seiner Gestalt mit dieser übereinstimmt.

33. Betätigungsvorrichtung nach Anspruch 32, bei der eines der ersten und zweiten Teile (119; 120) konisch ausgebildet ist und das andere dieser zwei Teile (117, 121) kugelförmig ausgebildet ist.

34. Betätigungsvorrichtung nach Anspruch 32 oder 33, bei der einige oder alle der Streifenform-Elektroden (118a, c; 120a, c) entlang verschiedener jeweiliger Breitengradlinien des kugelförmigen Flächenabschnitts des ersten Teiles (117, 120) angeordnet sind.

35. Betätigungsvorrichtung nach irgendeinem der Ansprüche 32 bis 34, bei der einige oder alle der Streifenform-Elektroden (118b, d) entlang verschiedener jeweiliger Längengradlinien des kugelförmigen Flächenabschnitts des ersten Teiles (117) angeordnet sind.

36. Betätigungsvorrichtung nach irgendeinem der vorhergehenden Ansprüche, bei der eine Oberfläche des Widerstandselements direkt gegenüber der Arbeitsfläche des ersten Teiles angeordnet ist und mit dieser in Berührung gelangen kann.

37. Vorrichtung zur Bestimmung einer vorbestimmten physikalischen Eigenschaft eines elektrischen Widerstands-Laminatkörpers, die folgendes aufweist:
ein Halterungsteil mit einer Arbeitsfläche, um einen solchen Körper zu haltern oder abzustützen und welches bei oder dicht bei der Arbeitsfläche eine Vielzahl von Streifenform-Elektroden aufweist, die voneinander isoliert sind, und
eine Steuereinrichtung, die dann, wenn ein solcher Körper auf der Arbeitsfläche abgestützt ist, so daß er zu den Elektroden hinzeigt, so betrieben werden kann, um eine vorbestimmte Anderung in den an die Elektroden angelegten Spannungen zu bewirken, so daß eine elektrostatische Kraft zwischen dem Körper und dem Abstützteil erzeugt wird, die eine relative Bewegung zwischen dem Körper und dem Abstützteil hervorbringt, wobei diese relative Bewegung so analysiert werden kann, um Daten für die Verwendung bei der Bestimmung der vorbestimmten physikalischen Eigenschaft des Körpers zu gewinnen.

38. Vorrichtung zum Klassifizieren der Größe einer Vielzahl von elektrischen Widerstands-Laminatkörpern, mit:
einem ersten Teil (160) mit einer Arbeitsfläche, um eine solche Vielzahl von Körpern, die zu klassifizieren sind, abzustützen, und welches bei oder dicht bei der Arbeitsfläche eine Vielzahl von Streifenform-Elektroden (161, 162, 163) aufweist, die sich parallel zueinander und isoliert gegeneinander erstrecken und über der Arbeitsfläche von einer Seite derselben zu der gegenüberliegenden Seite derselben verlaufend angeordnet sind, derart, daß deren gegenseitiger Abstand progressiv in der Richtung zunimmt, und zwar von der einen Seite zur der gegenüberliegenden Seite hin, und
einer Steuereinrichtung, die dann, wenn die Körper auf die genannte eine Seite der Arbeitsfläche plaziert sind, so daß sie zu den Elektroden hinweisen, so betreibbar ist, um eine Sequenz von vorbestimmten Änderungen in den an die Elektroden angelegten Spannungen zu bewirken, so daß elektrostatische Kräfte zwischen den Körpern einerseits und dem ersten Teil andererseits erzeugt werden, die eine sequentielle Bewegung der Körper über die Arbeitsfläche in der genannten Richtung zu der anderen Seite derselben hin hervorbringen, wobei die Größe jedes Körpers in Relation zu dem gegenseitigen Abstand der Elektroden die Strecke festlegt, über die sich der in Betracht stehende Körper in der genannten Richtung im Verlauf der Sequenz bewegt, so daß nach Vervollständigung dieser Sequenz die relativen Positionen der Körper auf der Arbeitsfläche eine Anzeige über deren relative Größen liefern.

## Revendications

1. Un actuateur électrostatique incluant :
un premier élément (1) ayant à, ou tout près de, une surface de travail de celui-ci, une pluralité d'électrodes (4) en forme de bande, agencées en un motif prédéterminé, avec des intervalles prédéterminés entre elles, les électrodes de ladite pluralité d'électrodes étant divisées en trois ensembles (4a, 4b, 4c), qui peuvent être excités indépendamment les uns des autres ;
un second élément (10) susceptible d'être mu par rapport au premier élément (1) et ayant un élément (12) de résistance, s'étendant au-dessus de ladite surface de travail, sur lequel un motif de charge prédéterminé peut être induit par application auxdits ensembles d'électrodes d'une combinaison prédéterminée de tensions ; et
des moyens (11) de commande pour amener un changement prédéterminé dans les tensions appliquées respectivement aux trois ensembles d'électrodes, de sorte qu'une force électrostatique est produite entre le premier et le second élément, qui provoque un mouvement relatif entre ces éléments dans une direction tangentielle aux électrodes en forme de bande ;
ledit élément (12) de résistance ayant une constante de temps, déterminée principalement par la résistivité volumique électrique et la constante diélectrique du matériau constituant cet élément, c'est-à-dire au moins deux fois le temps pris pour un tel mouvement relatif sur une distance (ℓ₂) correspondant à l'espacement mutuel des électrodes ;
caractérisé en ce que le premier élément (1) inclut une portion (125) de support d'électrode, faite de matériau isolant, sur une première surface de laquelle, les électrodes de deux desdits ensembles (126a, 126b) sont montées, et sur une autre surface de laquelle, opposée à ladite première surface, les électrodes de l'autre ensemble (126c) sont montées.

2. Un actuateur tel que revendiqué dans la revendication 1, dans lequel, ledit changement prédéterminé dans les tensions appliquées provoque aussi la séparation des premier et second éléments (1, 10) au moment dudit mouvement relatif.

3. Un actuateur tel que revendiqué dans la revendication 1 ou la revendication 2, dans lequel, lesdits moyens (11) de commande amènent des impulsions de tension à être appliquées aux ensembles d'électrodes, les moyens de commande étant susceptibles d'être exploités afin d'occasionner différentes combinaisons (+V, -V, 0 ; -V, +V, -V ; 0, +V, -V ; -V, -V, +V ; -V, 0, +V ; +V, -V, -V) de telles impulsions de tension devant être appliquées aux ensembles d'électrodes dans une séquence prédéterminée.

4. Un actuateur tel que revendiqué dans une quelconque précédentes revendication, dans lequel, la résistivité volumique électrique dudit élément (12) de résistance dudit second élément (10) est dans la plage de 10⁹ à 10¹⁹ Ωcm.

5. Un actuateur tel que revendiqué dans la revendication 4, dans lequel, la résistivité volumique électrique dudit élément (12) de résistance dudit second élément (10) est dans la plage de 10¹³ à 10¹⁵ Ωcm.

6. Un actuateur tel que revendiqué dans une quelconque précédente revendication, dans lequel, ledit élément de résistance dudit second élément (135) est fait d'un matériau photoconducteur.

7. Un actuateur tel que revendiqué dans la revendication 6, incluant de plus :
des moyens (130 ; 137, 138) d'irradiation de lumière, agencés pour irradier de la lumière sur ledit élément de résistance ;
lesdits moyens de commande étant susceptibles d'être exploités afin d'amener un premier motif de tension à être appliqué aux trois ensembles d'électrodes (4), à un moment où lesdits moyens d'irradiation de lumière sont en train d'irradier de la lumière sur ledit élément de résistance, et afin d'amener un motif de tension différent à être appliqué aux trois ensembles d'électrodes, lorsqu'une telle irradiation par les moyens d'irradiation de lumière est stoppée.

8. Un actuateur tel que revendiqué dans la revendication 7, dans lequel, ledit élément de résistance est un élément (135) de film mince fait d'un tel matériau photoconducteur, et lesdits moyens d'irradiation de lumière comprennent un dispositif, ou une pluralité de dispositifs (130a à f), d'émission de lumière agencés dans un plan commun.

9. Un actuateur tel que revendiqué dans la revendication 7, dans lequel, ledit élément de résistance est un élément (135) de film mince fait d'un tel matériau photoconducteur, et lesdits moyens (137, 138) d'irradiation de lumière comprennent un élément (138) de réorientation de lumière ayant une surface latérale formée avec une pluralité de portions d'émission de lumière à des positions différentes sur elles, lesquelles portions sont conformées telles, que lorsque l'élément de réorientation de lumière est irradié avec de la lumière provenant d'une source (137) de lumière unique, des faisceaux de lumière sont émis respectivement, par les portions d'émission de lumière, vers les portions prédéterminées respectives dudit élément de résistance.

10. Un actuateur tel que revendiqué dans une quelconque précédente revendication, dans lequel, une pluralité de tels premiers et seconds éléments (22 à 25, 32 à 35 ; 62 à 64, 72A à 75A ; 81 à 84, 86 à 89 ; 81 à 83, 86 à 88 ; 91, 93, 95, 97, 99, 90, 92, 94, 96, 98) sont empilés alternativement d'une manière telle, que les électrodes d'un des premiers éléments fait face à l'élément de résistance d'un desdits seconds éléments correspondants.

11. Un actuateur tel que revendiqué dans la revendication 10, dans lequel, chacun desdits premiers et seconds éléments (22 à 25, 32 à 35 ; 62 à 64, 72A à 75A ; 81 à 84, 86 à 89) est rectangulaire, et les premiers éléments (22 à 25 ; 62 à 64 ; 81 à 84) sont reliés ensemble à des portions d'extrémité respectives de ceux-ci, afin de former une première structure (20 ; 60 ; 80) intégrale, et les seconds éléments (32 à 35 ; 72A à 75A ; 86 à 89) sont reliés ensemble à des portions d'extrémité respectives de ceux-ci, afin de former une seconde structure (30 ; 70 ; 85) intégrale.

12. Un actuateur tel que revendiqué dans la revendication 10, dans lequel, chacun desdits premiers et seconds éléments (80 à 83, 86 à 88) est conformé arqué ou en éventail, et les premiers éléments (81 à 83) sont reliés ensemble à des portions d'extrémité respective de ceux-ci, afin de former une première structure (80) intégrale, et les seconds éléments (86 à 88) sont reliés ensemble à des portions d'extrémité respectives de ceux-ci, afin de former une seconde structure (85) intégrale.

13. Un actuateur tel que revendiqué dans la revendication 10, dans lequel, chacun desdits premiers et seconds éléments (90 à 99) est semblable à un disque ou un anneau.

14. Un actuateur tel que revendiqué dans la revendication 13, dans lequel, au moins quelques unes des électrodes (91c, 93c, 95c, 97c, 99c) de chaque premier élément (91, 93, 95, 97, 99) sont agencées afin de s'étendre radialement par rapport à un emplacement central du premier élément concerné.

15. Un actuateur tel que revendiqué dans la revendication 14, dans lequel, lesdits premiers et seconds éléments sont tous semblables à des disques et sont empilés coaxialement, et chaque élément a, audit emplacement central de celui-ci, une ouverture à travers laquelle un arbre (100) rotatif d'actuateur s'étend, au moins un desdits premiers éléments ou au moins un desdits seconds éléments (90, 92, 94, 96, 98) étant fixé audit arbre (100) rotatif.

16. Un actuateur tel que revendiqué dans la revendication 15, dans lequel, chacun desdits seconds éléments (90, 92, 94, 96, 98) a un élément (90a, 92a, 94a, 96a, 98a) de support pour supporter L'élément (90b, 92b, 94b, 96b, 98b) de résistance du second élément concerné.

17. Un actuateur tel que revendiqué dans une quelconque précédente revendication, dans lequel, ledit premier élément (40) a aussi, à, ou tout près de, sa dite surface de travail, une autre pluralité de telles électrodes en forme de bande, agencées dans un autre motif (42/43 ; 46/47 ; 49b/49d), dans lequel, les électrodes s'étendent dans une direction différente des électrodes dudit motif (41 ; 48 ; 49a/49c) prédéterminé.

18. Un actuateur tel que revendiqué dans la revendication 17, dans lequel, les électrodes dudit autre motif (42/43 ; 46/47 ; 49b/49d) s'étendent orthogonalement par rapport à celles dudit motif (41 ; 48 ; 49a/49c) prédéterminé.

19. Un actuateur tel que revendiqué dans la revendication 17 ou la revendication 18, dans lequel, lesdits moyens de commande sont susceptibles d'être exploités afin d'exciter les électrodes d'un des deux motifs indépendamment des électrodes de l'autre de ces deux motifs.

20. Un actuateur tel que revendiqué dans la revendication 17 ou la revendication 18, dans lequel, les moyens de commande sont susceptibles d'être exploités afin d'exciter les électrodes des deux motifs simultanément, grâce à quoi, ledit mouvement relatif a des composantes respectives dans ladite direction tangentielle aux électrodes en forme de bande du motif (41 ; 48 ; 49a/49c) prédéterminé et dans une direction tangentielle aux électrodes en forme de bande dudit autre motif (42/43 ; 46/47 ; 49b/49d).

21. Un actuateur tel que revendiqué dans la revendication 18 ou dans la revendication 19 ou la revendication 20, lorsque l'une de ces revendications est lue comme annexée à la revendication 18, dans lequel, ledit premier élément (40) a aussi, à, ou tout près de, sa dite surface de travail, une troisième pluralité de telles électrodes en forme de bande, agencées en un motif (49z) semblable à un anneau, dans lequel, chaque électrode s'étend radialement par rapport à un point central sur le premier élément.

22. Un actuateur électrostatique incluant :
un premier élément semblable à une feuille, ayant, à, ou tout près de, une surface de travail de celui-ci, une pluralité d'électrodes (93) en forme de bande isolées les unes des autres ;
un second élément, en forme d'un élément de film mince, susceptible d'être mu par rapport au premier élément et ayant un élément (90) de résistance, s'étendant au-dessus de ladite surface de travail, sur lequel, un motif de charge prédéterminé peut être induit par application auxdites électrodes (93) d'une combinaison prédéterminée de tensions ; et
des moyens de commande pour amener un changement prédéterminé dans les tensions appliquées aux électrodes (93), de sorte qu'une force électrostatique est produite entre les premier et second éléments, ce qui provoque un mouvement relatif entre ces éléments ;
la constante de temps dudit élément (90) de résistance, qui est déterminée principalement par la résistivité volumique électrique et la constante diélectrique du matériau constituant cet élément, étant au moins deux fois le temps nécessaire pour un tel mouvement relatif sur une distance correspondant à l'espacement mutuel des électrodes (93) ;
caractérisé par un élément (92) de support, qui supporte ledit élément (90) de résistance à des extrémités opposées de celui-ci et qui a un évidement (91) permettant un fléchissement d'une portion intermédiaire de cet élément, entre lesdites extrémités opposées.

23. Un actuateur tel que revendiqué dans la revendication 22, dans lequel, les moyens de commande sont susceptibles d'être explcités afin de commander les tensions appliquées aux électrodes (93) d'une manière telle, qu'elles placent le second élément sous tension.

24. Un actuateur électrostatique incluant :
un premier élément (52) semblable à une feuille, ayant, à, ou tout près de, une surface de travail de celui-ci, une pluralité d'électrodes (53, 54) en forme de bande isolée les unes des autres et s'étendant dans une direction prédéterminée avec des intervalles prédéterminés entre elles ;
un second élément (55), en forme d'un élément de film mince, susceptible d'être mu par rapport au premier élément (52) et ayant un élément de résistance, s'étendant au-dessus de ladite surface de travail, sur lequel, un motif de charge prédéterminé peut être induit par application auxdites électrodes (53, 54) d'une combinaison prédéterminée de tensions ; et
des moyens de commande pour amener un changement prédéterminé dans les tensions appliquées aux électrodes (53, 54), de sorte qu'une force électrostatique est produite entre le premier et second élément, ce qui provoque un mouvement relatif entre ces éléments ;
la constante de temps dudit élément de résistance, qui est déterminée principalement par la résistivité volumique électrique et la constante diélectrique du matériau constituant cet élément, étant au moins deux fois le temps nécessaire pour un tel mouvement relatif sur une distance correspondant à l'espacement mutuel des électrodes ;
caractérisé en ce que les électrodes de ladite pluralité d'électrodes sont divisées en deux ensembles (53, 54) agencés de telle sorte, qu'une première portion du second élément (55) s'étend au-dessus d'électrodes de l'un de ces ensembles (53) tandis qu'une seconde portion du second élément s'étend au-dessus d'électrodes de l'autre ensemble (54), des moyens de commande étant susceptibles d'être exploités afin de commander des tensions appliquées aux deux ensembles (53, 54) d'électrodes d'une façon telle, qu'elles tendent à amener la première et la seconde portion à se déplacer simultanément dans des directions (A, B) respectives opposées, par ce moyen à placer le second élément (55) sous tension.

25. Un actuateur électrostatique incluant :
un premier élément (56 ; 200) ayant, à, ou tout près de, une surface de travail (56a/56b) de travail de celui-ci, une pluralité d'électrodes (57 ; 104) ) en forme de bande isolées chacune de la suivante ;
un second élément (58 ; 102) susceptible d'être mu par rapport au premier élément et ayant un élément de résistance, s'étendant au-dessus de ladite surface de travail, sur lequel, un motif de charge prédéterminé peut être induit par application auxdites électrodes d'une combinaison prédéterminée de tensions ; et
des moyens de commande pour amener un changement prédéterminé dans les tensions appliquées aux électrodes, de sorte qu'une force électrostatique est produite entre le premier et second élément, ce qui provoque un mouvement relatif entre ces éléments (56, 58 ; 200, 102) ;
ledit élément de résistance ayant une constante de temps, déterminée principalement par la résistivité volumique électrique et la constante diélectrique du matériau constituant cet élément, qui est au moins deux fois le temps pris pour un tel mouvement relatif sur une distance correspondant à l'espacement mutuel des électrodes (57, 104) ;
caractérisé en ce que ledit premier élément (56, 200) a une portion de corps principale cylindrique, une surface (56a/56b) cylindrique duquel sert de ladite surface de travail, les électrodes (57, 104) en forme de bande étant chacune agencées afin de s'étendre dans la direction axiale de ladite portion de corps principale cylindrique et étant espacées circonférentiellement au-dessus de ladite surface (56a/56b) cylindrique de cette portion ; et
en ce que ledit second élément a aussi une surface cylindrique, qui s'étend au-dessus de ladite surface (56a/56b) de travail dudit premier élément.

26. Un actuateur électrostatique incluant :
un premier élément (200) ayant, à, ou tout près de, une surface de travail de celui-ci, une pluralité d'électrodes (101) en forme de bande isolée chacune de la suivante ;
un second élément (102), susceptible d'être mu par rapport au premier élément et ayant un élément de résistance, s'étendant au-dessus de ladite surface de travail, sur lequel, un motif de charge prédéterminé peut être induit par application auxdits ensembles d'électrodes d'une combinaison prédéterminée de tensions ; et
des moyens de commande pour amener un changement prédéterminé dans les tensions appliquées aux électrodes (101), de sorte qu'une force électrostatique est produite entre le premier élément et le second élément, ce qui provoque un mouvement relatif entre ces éléments (200, 102) ;
ledit élément de résistance ayant une constante de temps, déterminée principalement par la résistivité volumique électrique et la constant diélectrique du matériau constituant cet élément, c'est-à-dire au moins deux fois le temps pris pour un tel mouvement relatif sur une distance correspondant à l'espacement mutuel des électrodes (101) ;
caractérisé en ce que ledit premier élément (200) a une portion de corps principal cylindrique, une surface cylindrique de laquelle sert de ladite surface de travail, les électrodes (101) s'étendant chacune circonférentiellement autour de la surface cylindrique de ladite portion de corps principal et étant espacée chacune de la suivante dans la direction axiale de ladite portion de corps principal cylindrique ; et
en ce que ledit second élément a une surface cylindrique, qui s'étend au-dessus de ladite surface de travail du premier élément (200).

27. Un actuateur tel que revendiqué dans la revendication 26, dans lequel, ledit premier élément (200) a aussi, à, ou tout près de, ladite surface de travail, une autre pluralité d'électrodes (104) en forme de bande s'étendant respectivement dans ladite direction axiale de ladite portion de corps principal cylindrique et étant espacées circonférentiellement au-dessus de ladite surface cylindrique de ladite portion de corps principal, lesquelles électrodes (104) sont isolées les unes des autres ;
lesdits moyens de commande étant aussi susceptibles d'être exploités sélectivement afin d'amener un changement prédéterminé dans les tensions appliquées aux électrodes (104) de ladite autre pluralité d'électrodes, de façon à provoquer un mouvement relatif entre ledit premier élément et ledit second élément (200, 102) dans la direction circonférentielle.

28. Un actuateur électrostatique incluant un premier élément (105) ayant, à, ou tout près de, une surface de travail de celui-ci, une pluralité d'électrodes (106a, 106b) en forme de bande, isolées les unes des autres et s'étendant dans une direction prédéterminée, avec des intervalles prédéterminés entre elles ;
un second élément (107) susceptible d'être mu au-dessus de ladite surface de travail et ayant un élément de résistance, s'étendant au-dessus de ladite surface de travail, sur lequel, un motif de charge prédéterminé peut être induit par application auxdites électrodes d'une combinaison de tension prédéterminée ; et
des moyens de commande pour amener un changement prédéterminé dans les tensions appliquées auxdites électrodes (106a, 106b), de sorte qu'une force électrostatique est produite entre le premier élément et le second élément, qui provoque un mouvement du second élément à travers ladite surface de travail, dans une direction perpendiculaire à ladite direction prédéterminée ;
la constante de temps dudit élément (90) de résistance, qui est déterminée principalement par la résistivité volumique électrique et la constante diélectrique du matériau constituant cet élément, étant au moins deux fois le temps nécessaire pour un tel mouvement relatif sur une distance correspondant à l'espacement mutuel des électrodes (93) ;
caractérisé en ce que ledit second élément est un élément de film mince flexible ; et
caractérisé de plus en ce que les moyens de commande sont susceptibles d'être exploités afin de commander des tensions appliquées aux électrodes d'une manière telle, qu'elles amènent des portions menante et traînante (107a, 107b) respectives du second élément (107) à être mues alternativement dans ladite direction perpendiculaire à la direction prédéterminée.

29. Un actuateur électrostatique incluant :
un premier élément (112 ; 112a/112b) ayant, à, ou tout près de, une surface de travail de celui-ci, une pluralité d'électrodes (111) en forme de bande, isolées les unes des autres et s'étendant dans une direction prédéterminée avec des intervalles prédéterminés entre elles ;
un second élément (110), susceptible d'être mu au-dessus de ladite surface de travail et ayant un élément de résistance, s'étendant au-dessus de ladite surface de travail, sur lequel un motif de charge prédéterminé peut être induit par application auxdites électrodes d'une combinaison de tensions prédéterminée ; et
des moyens de commande pour amener un changement prédéterminé dans les tensions appliquées auxdites électrodes (111), de sorte qu'une force électrostatique est produite entre le premier et le second élément, qui provoque un mouvement du second élément à travers ladite surface de travail, dans une direction perpendiculaire à ladite direction prédéterminée ;
la constante de temps dudit élément de résistance, qui est déterminée principalement par la résistivité volumique électrique et la constante diélectrique du matériau constituant cet élément, étant au moins deux fois le temps nécessaire pour un tel mouvement du second élément sur une distance correspondant à l'espacement mutuel des électrodes (111) ;
caractérisé en ce que ledit élément est en forme d'une courroie (110) sans fin flexible, qui est supportée de façon à pouvoir tourner par un élément (109a) de support de telle sorte, qu'un côté de la courroie est opposé à ladite surface de travail, grâce à quoi, ledit mouvement du second élément à travers ladite surface de travail du premier élément provoque une rotation dudit second élément autour de l'élément de support.

30. Un actuateur électrostatique incluant :
une paire d'éléments (113, 114 ; 115, 116) de support cylindriques, agencés côte à côte, ayant chacun, à, ou tout près de, une surface périphérique extérieure de celui-ci, une pluralité d'électrodes (113a, 114a ; 115a, 116a) en forme de bande isolées les unes des autres, s'étendant dans la direction axiale de l'élément de support cylindrique et espacées circonférentiellement au-dessus de ladite surface périphérique extérieure, avec des intervalles prédéterminées entre elles ;
un élément (110) susceptible d'être mu, constitué d'un élément de résistance flexible semblable à une courroie sans fin, formant ainsi une boucle autour des deux dits éléments (113, 114 ; 115, 116) de support cylindrique, qu'une surface intérieure de l'élément est opposée à ladite surface périphérique extérieure de chaque élément de support cylindrique ; et
des moyens de commande, pour amener un changement prédéterminé dans les tensions appliquées aux électrodes (113a, 114a ; 115a, 116a) , de façon à provoquer une rotation dudit élément (110) susceptible d'être mu autour desdits éléments de support ;
la constante de temps dudit élément de résistance, qui est déterminée principalement par la résistivité volumique électrique et la constante diélectrique du matériau constituant cet élément, étant au moins deux fois le temps nécessaire pour l'élément (110) susceptible d'être mu afin de se mouvoir d'une distance correspondant à l'espacement mutuel des électrodes (113a, 114a ; 115a, 116a).

31. Un actuateur tel que revendiqué dans la revendication 30, dans lequel, au moins un desdits éléments (115) de support cylindrique a des moyens d'entraînement en rotation susceptibles d'être exploités afin de provoquer une rotation de l'élément de support concerné.

32. Un actuateur électrostatique comprenant :
un premier élément (117, 120) ayant, à, ou tout près de, une surface de travail de celui-ci, une pluralité d'électrodes (118a à d ; 120a/c) en forme de bande isolées les unes des autres ;
un second élément (119 ; 121) susceptible d'être mu par rapport au premier élément et ayant un élément de résistance, s'étendant au-dessus de ladite surface de travail, sur lequel, un motif de charge prédéterminé peut être induit par application auxdites électrodes d'une combinaison prédéterminée de tensions ; et
des moyens de commande pour amener un changement prédéterminé dans les tensions appliquées aux électrodes, de sorte qu'une force électrostatique est produite entre le premier élément et le second élément, qui provoque un mouvement relatif entre ces éléments (117, 119 ; 120, 121) ;
ledit élément de résistance ayant une constante de temps, déterminée principalement par la résistivité volumique électrique et la constante diélectrique du matériau constituant cet élément, qui est au moins deux fois le temps pris pour un tel mouvement relatif sur une distance correspondant à l'espacement mutuel des électrodes (118a à d ; 120a/c) ;
caractérisé en ce que ledit premier élément (117, 120) a une portion de corps principal ayant une portion de surface sphérique, qui sert de ladite surface de travail ; et
en ce que ledit second élément a aussi une portion de surface sphérique, qui s'étend au-dessus de ladite surface de travail et est conformée à celle-ci.

33. Un actuateur tel que revendiqué dans la revendication 32, dans lequel, un desdits premiers et seconds éléments (119 ; 120) est conique et l'autre de ces deux éléments (117 ; 121) est sphérique.

34. Un actuateur tel que revendiqué dans la revendication 32 ou la revendication 33, dans lequel, quelques unes des électrodes (118a, c ; 120a, c) en forme de bande, ou toutes, sont déployées le long de lignes de latitude respectives différentes de ladite portion de surface sphérique dudit premier élément (117, 120).

35. Un actuateur tel que revendiqué dans une quelconque des revendications 32 à 34, dans lequel, quelques unes desdites électrodes (118b, d) en forme de bande, ou toutes, sont déployées le long de lignes de longitude respectives différentes de ladite portion de surface sphérique dudit premier élément (117).

36. Un actuateur tel que revendiqué dans une quelconque précédentes revendications, dans lequel, une surface de l'élément de résistance est directement opposée à, et peut venir en contact avec, ladite surface de travail du premier élément.

37. Dispositif pour emploi dans la détermination d'une propriété physique predeterminee d'un corps résistant électriquement, feuilleté, lequel dispositif comprend !
un élément de support ayant une surface de travail pour supporter un tel corps et ayant aussi, à, ou tout près de, ladite surface de travail, une pluralité d'électrodes en forme de bande isolées les unes des autres ; et
des moyens de commande susceptibles d'être exploités, lorsqu'un tel corps est supporté sur ladite surface de travail de façon à faire face auxdites électrodes, afin d'amener ainsi un changement prédéterminé dans les tensions appliquées aux électrodes, qu'une force électrostatique est produite entre le corps et l'élément de support, qui provoque un mouvement relatif entre le corps et l'élément de support, lequel mouvement relatif peut être analysé afin de procurer des données pour emploi dans la détermination de ladite propriété physique prédéterminée du corps.

38. Dispositif pour classifier par dimension une pluralité de corps résistant électriquement, feuilletés, comprenant :
un premier élément (160) ayant une surface de travail pour supporter une telle pluralité de corps devant être classifiés et ayant aussi, à, ou tout près de, ladite surface de travail, une pluralité d'électrodes (161, 162, 163) en forme de bande s'étendant parallèlement les unes aux autres, et qui sont isolées les unes des autres et déployées à travers ladite surface de travail, depuis un côté de celle-ci au côté opposé de celle-ci, de sorte que leur espacement mutuel augmente progressivement dans la direction depuis ledit premier côté audit côté opposé ; et
des moyens de commande susceptibles d'être exploités lorsque de tels corps sont placés sur ledit premier côté de ladite surface de travail de façon à faire face aux électrodes, afin d'amener ainsi une séquence de changements prédéterminés dans les tensions appliquées aux électrodes, que des forces électrostatiques sont produites entre les corps d'une part et le premier élément d'autre part, provoquant un mouvement séquentiel des corps au-dessus de la surface de travail dans ladite direction vers ledit autre côté de celle-ci, la dimension de chaque corps, en relation avec l'espacement mutuel des électrodes, déterminant ainsi la distance que le corps concerné parcourt dans ladite direction lors du cours de ladite séquence, que, lors d'achèvement de cette séquence, les positions relatives des corps sur ladite surface de travail donnent une indication de leurs dimensions relatives.
